# EUROPEAN PATENT APPLICATION

(11) **EP 4 770 035 A1**
(43) Date of publication of application: **01.07.2026**
(21) Application number: 24867022.6
(22) Date of filing: 05.07.2024
(51) Int. Cl.: H04L 43/08

(54) **TRANSMISSION QUALITY DETECTION METHOD AND APPARATUS, AND DEVICE, SYSTEM AND STORAGE MEDIUM**

(30) Priority: 19.09.2023 CN 202311213199
(71) Applicant: HUAWEI TECHNOLOGIES CO., LTD., Shenzhen 518129 (CN)
(72) Inventor: LIU, Pengwei, Shenzhen, Guangdong 518129 (CN); ZHANG, Peng, Shenzhen, Guangdong 518129 (CN); ZHOU, Linkai, Shenzhen, Guangdong 518129 (CN); CHU, Shaowei, Shenzhen, Guangdong 518129 (CN); SUN, Chunxia, Shenzhen, Guangdong 518129 (CN); DENG, Luyao, Shenzhen, Guangdong 518129 (CN)
(74) Representative: Thun, Clemens
(86) International application number: PCT/CN2024/103852
(87) International publication number: WO 2025/060604

(57) **Abstract**

This application discloses a transmission quality detection method and apparatus, a device, a system, and a storage medium, relating to the field of communication technologies. A BNG is connected to a terminal through at least one network including an aggregation network. The method includes: obtaining first transmission information and/or second transmission information, where the first transmission information includes information about transmission from the BNG to the aggregation network that is recorded by a first network edge node and information about transmission from the aggregation network to the terminal that is recorded by a second network edge node, and the second transmission information includes information about transmission from the terminal to the aggregation network that is recorded by a third network edge node and information about transmission from the aggregation network to the BNG that is recorded by a fourth network edge node; and detecting hop-by-hop network transmission quality between the BNG and the terminal based on the first transmission information and/or the second transmission information. Therefore, transmission quality between the terminal and the aggregation network and transmission quality between the aggregation network and the BNG are detected without cooperation of the terminal, and further the hop-by-hop network transmission quality between the BNG and the terminal is obtained.

## Description

This application claims priority to Chinese Patent Application No. 202311213199.1 filed on September 19, 2023 and entitled "TRANSMISSION QUALITY DETECTION METHOD AND APPARATUS, DEVICE, SYSTEM, AND STORAGE MEDIUM", which is incorporated herein by reference in its entirety.

### TECHNICAL FIELD

This application relates to the field of communication technologies, and in particular, to a transmission quality detection method and apparatus, a device, a system, and a storage medium.

### BACKGROUND

A broadband network gateway (broadband network gateway, BNG) serves as a bridge for terminals to access a broadband network. The connection between the BNG and the terminal spans multiple networks. For example, the terminal needs to traverse an access network and an aggregation network before reaching the BNG. In a network operation process, factors such as fiber aging or network faults may degrade transmission quality, resulting in impaired terminal services. Therefore, there is an urgent need to provide a method for detecting hop-by-hop network transmission quality between the BNG and a terminal, such that timely repairs can be carried out when transmission quality is not desirable.

### SUMMARY

This application provides a transmission quality detection method and apparatus, a device, a system, and a storage medium, to detect hop-by-hop network transmission quality between a BNG and a terminal.

According to a first aspect, a transmission quality detection method is provided. A BNG performing the method is used as an example, and the BNG is connected to a terminal through at least one network including an aggregation network. The method includes: obtaining first transmission information and/or second transmission information, where the first transmission information includes information about transmission from the BNG to the aggregation network and information about transmission from the aggregation network to the terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, the second transmission information includes information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network; and detecting hop-by-hop network transmission quality between the BNG and the terminal based on the first transmission information and/or the second transmission information.

In the method, because the obtained first transmission information and/or the obtained second transmission information are/is transmission information of the hop-by-hop network between the BNG and the terminal, the hop-by-hop network transmission quality between the BNG and the terminal can be detected based on the first transmission information and/or the second transmission information, to be specific, not only transmission quality between the terminal and the aggregation network can be detected, but also transmission quality between the aggregation network and the BNG can be detected, so that the hop-by-hop network transmission quality between the BNG and the terminal can be obtained. In this way, when a network fault occurs, whether the network fault occurs between the terminal and the aggregation network, inside the aggregation network, between the aggregation network and the BNG, or inside the BNG can be quickly demarcated based on the hop-by-hop network transmission quality. In addition, the method does not require cooperation of the terminal, and is not subject to configurations of the terminal or whether the terminal has service traffic. Therefore, operation and maintenance efficiency is high, and implementation is simple and quick.

In a possible implementation, a manner of obtaining the first transmission information includes: The BNG sends a detection request packet to the terminal, where the detection request packet triggers the first network edge node to record the information about transmission from the BNG to the aggregation network, and triggers the second network edge node to record the information about transmission from the aggregation network to the terminal; and the BNG sends a first collection request packet to the aggregation network, receives the information about transmission from the BNG to the aggregation network that is returned by the first network edge node based on the first collection request packet, and receives the information about transmission from the aggregation network to the terminal that is returned by the second network edge node based on the first collection request packet. The detection request packet is sent to trigger the network edge node to record the first transmission information, and the first collection request packet is sent to trigger the network edge node to send the recorded first transmission information to the BNG, so that the BNG can obtain the first transmission information without depending on service traffic.

In other words, when the BNG sends the detection request packet to the terminal through the aggregation network, the first network edge node near the BNG side in the aggregation network receives the detection request packet, so that the first network edge node can record, based on the received detection request packet, the information about transmission from the BNG to the aggregation network; and the second network edge node near the terminal side in the aggregation network also receives the detection request packet, so that the second network edge node can record, based on the received detection request packet, the information about transmission from the aggregation network to the terminal. The information about transmission from the BNG to the aggregation network may be information about transmission that the detection request packet ingresses the aggregation network, and the information about transmission from the aggregation network to the terminal may be information about transmission that the detection request packet egresses the aggregation network.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network. For example, the BNG sends a plurality of detection request packets to the terminal, the first network edge node records first input counts of the received detection request packets and a first input time of each received detection request packet, and the second network edge node records first output counts of the received detection request packets and a first output time of each received detection request packet. That is, the first transmission information includes an input/output count and an input/output time of the detection request packet, so that the BNG can detect, based on the first transmission information, transmission quality such as a packet loss rate and a delay of the hop-by-hop network in a direction from the BNG to the terminal.

In a possible implementation, a manner of obtaining the second transmission information includes: The BNG receives a detection reply packet returned by the terminal based on the detection request packet, where the detection reply packet triggers the third network edge node to record the information about transmission from the terminal to the aggregation network, and triggers the fourth network edge node to record the information about transmission from the aggregation network to the BNG; and the BNG sends a second collection request packet to the aggregation network, receives the information about transmission from the terminal to the aggregation network that is returned by the third network edge node based on the second collection request packet, and receives the information about transmission from the aggregation network to the BNG that is returned by the fourth network edge node based on the second collection request packet. The detection reply packet returned by the terminal is received to trigger the network edge node to record the second transmission information, and the second collection request packet is sent to trigger the network edge node to send the recorded second transmission information to the BNG, so that the BNG can obtain the second transmission information without depending on service traffic.

After the terminal receives the detection request packet sent by the BNG, the terminal returns the corresponding detection reply packet to the BNG through the aggregation network based on the detection request packet, and the third network edge node near the terminal side in the aggregation network receives the detection reply packet, so that the third network edge node can record, based on the received detection reply packet, the information about transmission from the terminal to the aggregation network; and the fourth network edge node near the BNG side in the aggregation network also receives the detection reply packet, so that the fourth network edge node can record, based on the received detection reply packet, the information about transmission from the aggregation network to the BNG. The information about transmission from the terminal to the aggregation network may be information about transmission that the detection reply packet ingresses the aggregation network, and the information about transmission from the aggregation network to the BNG may be information about transmission that the detection reply packet egresses the aggregation network.

In a possible implementation, the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network. For example, the BNG sends a plurality of detection request packets to the terminal, and therefore, the terminal returns a plurality of detection reply packets to the BNG. The third network edge node records second input counts of the received detection reply packets and a second input time of each received detection reply packet, and the fourth network edge node records second output counts of the received detection reply packets and a second output time of each received detection reply packet. That is, the second transmission information includes an input/output count and an input/output time of the detection reply packet, so that the BNG can detect, based on the second transmission information, transmission quality such as a packet loss rate and a delay of the hop-by-hop network in a direction from the terminal to the BNG. When both the first transmission information and the second transmission information are obtained, the BNG can detect, based on the first transmission information and the second transmission information, transmission quality such as a round-trip packet loss rate and a round-trip delay of the hop-by-hop network between the terminal and the BNG.

In a possible implementation, the method further includes: recording sending information for sending the detection request packet and receiving information for receiving the detection reply packet, where the sending information includes at least one of a sending count and a sending time, and the receiving information includes at least one of a receiving count and a receiving time. In this case, in addition to the detecting the hop-by-hop network transmission quality between the BNG and the terminal based on the first transmission information and the second transmission information, end-to-end transmission quality between the BNG and the terminal may be detected based on the sending information and the receiving information. Therefore, transmission quality between the terminal and the BNG, transmission quality between the terminal and the aggregation network, transmission quality inside the aggregation network, and transmission quality between the aggregation network and the BNG can be detected based on the sending information, the first transmission information, the second transmission information, and the receiving information.

In a possible implementation, the first collection request packet includes a first type (type), length (length), and value (value) field (a TLV field for short), and a type (type) field in the first TLV field indicates that the first collection request packet is used to obtain the information about transmission from the BNG to the aggregation network or the information about transmission from the aggregation network to the terminal; and the second collection request packet includes a second TLV field, and a type field in the second TLV field indicates that the second collection request packet is used to obtain the information about transmission from the terminal to the aggregation network or the information about transmission from the aggregation network to the BNG. The TLV field is carried in the collection request packet, and the type field in the TLV field indicates a specific piece of transmission information that is obtained, so that the collection request packet can accurately obtain the transmission information as required. Because different transmission information is recorded by different network edge nodes or a same network edge node, collection request packets carrying different TLV fields are sent, so that different network edge nodes can be triggered to separately return corresponding transmission information.

In a possible implementation, if a protocol type of the terminal is point-to-point protocol over ethernet (point-to-point protocol over ethernet, PPPOE), the detection request packet and the first collection request packet may be echo request (echo request) packets of a link control protocol (link control protocol, LCP); or if the protocol type of the terminal is internet protocol over ethernet version 4 (internet protocol over ethernet version 4, IPOE V4), the detection request packet and the first collection request packet may be ARP request packets of an address resolution protocol (address resolution protocol, ARP); or if the protocol type of the terminal is internet protocol over ethernet version 6 (internet protocol over ethernet version 6, IPOE V6), the detection request packet and the first collection request packet may be neighbor solicitation (neighbor solicitation, NS) packets of a neighbor discovery (neighbor discovery, ND) protocol. The terminal may be an optical modem.

For terminals of different protocol types, the detection request packet and the collection request packet may use a request type packet corresponding to the protocol type, so that the method can be implemented based on a request packet defined in an existing protocol, and no additional extension is required. In addition, because the detection request packet is the request packet defined in the existing protocol, after receiving the detection request packet, the terminal can return a corresponding detection reply packet based on the existing protocol, and the terminal can return the detection reply packet without performing additional configuration on the terminal. That is, when the detection request packet is an echo request packet, the detection reply packet is an echo reply (echo reply) packet; or when the detection request packet is an ARP request packet, the detection reply packet is an ARP reply packet; or when the detection request packet is an NS packet, the detection reply packet is a neighbor advertisement (neighbor advertisement, NA) packet.

In a possible implementation, a manner of sending the detection request packet to the terminal may be: sending the detection request packet to the terminal based on a packet sending parameter, where the packet sending parameter includes at least one of a packet sending frequency, a packet sending quantity, a packet sending time interval, a packet length, and a packet priority. The packet sending frequency, the packet sending quantity, the packet sending time interval, the packet length, and the packet priority all may be flexibly set based on an application scenario, so that transmission quality can be detected by sending the detection request packet to the terminal based on the packet sending parameter. For example, the packet sending quantity is 5, the packet sending time interval is 1 second, and the packet priority corresponds to a priority of the terminal, so that a detection request packet used to detect transmission quality of a same terminal matches a priority of a transmitted service packet.

In a possible implementation, before sending the detection request packet to the terminal, the BNG may first disable a keepalive probe mechanism configured by the terminal, and stop sending, to the terminal, a keepalive probe packet corresponding to the keepalive probe mechanism; and after detecting the hop-by-hop network transmission quality between the BNG and the terminal based on the first transmission information and/or the second transmission information, may restart the keepalive probe mechanism configured by the terminal, and continue to send, to the terminal, a keepalive probe packet corresponding to the keepalive probe mechanism.. In this way, in a period of detecting the hop-by-hop network transmission quality between the BNG and the terminal, the detection request packet sent by the BNG to the terminal does not include the keepalive probe packet, that is, the obtained first transmission information and/or the obtained second transmission information are/is not interfered by the keepalive probe mechanism of the terminal. This improves accuracy of the obtained first transmission information and/or the obtained second transmission information, and further improves accuracy of the detected hop-by-hop network transmission quality.

The first network edge node may be the same as or different from the third network edge node, and the second network edge node may be the same as or different from the fourth network edge node.

According to a second aspect, a transmission quality detection method is provided. A network edge node in an aggregation network performing the method is used as an example, and at least one network including the aggregation network is configured to connect a terminal and a BNG. The method includes: when a received packet meets a detection request condition, determining that the received packet is a detection request packet sent by the BNG to the terminal; and if the network edge node is located near the BNG side in the aggregation network, recording information about transmission from the BNG to the aggregation network in first transmission information; or if the network edge node is located near the terminal side in the aggregation network, recording information about transmission from the aggregation network to the terminal in the first transmission information; when the received packet meets a detection reply condition, determining that the received packet is a detection reply packet sent by the terminal to the BNG; and if the network edge node is located near the terminal side in the aggregation network, recording information about transmission from the terminal to the aggregation network in second transmission information; or if the network edge node is located near the BNG side in the aggregation network, recording information about transmission from the aggregation network to the BNG in the second transmission information; and when the received packet meets a collection request condition, determining that the received packet is a collection request packet sent by the BNG, and sending, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

The network edge node in the method may record and return the information about transmission from the BNG to the aggregation network, the information about transmission from the aggregation network to the terminal, the information about transmission from the terminal to the aggregation network, or the information about transmission from the aggregation network to the BNG, so that the BNG can obtain the first transmission information and/or the second transmission information. Because the first transmission information and/or the second transmission information is hop-by-hop transmission information of a network between the BNG and the terminal, the BNG may detect, based on the first transmission information and/or the second transmission information, hop-by-hop transmission quality of the network between the BNG and the terminal, that is, may detect not only transmission quality between the terminal and the aggregation network, but also transmission quality between the aggregation network and the BNG. In this way, when a network fault occurs, whether the network fault occurs between the terminal and the aggregation network, inside the aggregation network, between the aggregation network and the BNG, or inside the BNG can be quickly demarcated based on the hop-by-hop network transmission quality. In addition, the method does not require cooperation of the terminal, and is not subject to configurations of the terminal or whether the terminal has service traffic. Therefore, operation and maintenance efficiency is high, and implementation is simple and quick.

In a possible implementation, the detection request condition includes that a destination address is an address of the terminal, and a packet type is a request packet; the detection reply condition includes that a source address is an address of the terminal, and a packet type is a reply packet; and the collection request condition includes that a destination address is a reference multicast address, a packet type is a request packet, and the reference multicast address includes an address of a network node in a broadcast domain bridge domain (bridge domain, BD) corresponding to the terminal. The network edge node can identify the detection request packet by using the detection request condition, so that the information about transmission from the BNG to the aggregation network or the information about transmission from the aggregation network to the terminal can be recorded based on the detection request packet; the network edge node can identify the detection reply packet by using the detection reply condition, so that the information about transmission from the terminal to the aggregation network or the information about transmission from the aggregation network to the BNG can be recorded based on the detection reply packet; and the network edge node can identify the collection request packet by using the collection request condition, so that the recorded information about transmission from the terminal to the aggregation network, the recorded information about transmission from the aggregation network to the BNG, the recorded information about transmission from the terminal to the aggregation network, or the recorded information about transmission from the aggregation network to the BNG can be returned to the BNG based on the collection request packet.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network; and the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network. In other words, the first transmission information includes the input/output count and the input/output time of the detection request packet, and the second transmission information includes the input/output count and the input/output time of the detection reply packet, so that when both the first transmission information and the second transmission information are obtained, the BNG can detect, based on the first transmission information and the second transmission information, transmission quality such as a round-trip packet loss rate and a round-trip delay of the hop-by-hop network between the terminal and the BNG.

In a possible implementation, if a protocol type of the terminal is PPPOE, the detection request packet and the collection request packet may be echo request packets of an LCP; or if the protocol type of the terminal is IPOE V4, the detection request packet and the collection request packet may be ARP request packets of an ARP; or if the protocol type of the terminal is IPOE V6, the detection request packet and the collection request packet may be NS packets of an ND protocol. The terminal may be an optical modem. For terminals of different protocol types, the detection request packet and the collection request packet may use a request type packet corresponding to the protocol type, so that the method can be implemented based on a request packet defined in an existing protocol, and no additional extension is required.

In a possible implementation, the collection request packet includes a TLV field, and a type field in the TLV field indicates that the collection request packet is used to obtain the information about transmission from the BNG to the aggregation network, the information about transmission from the aggregation network to the terminal, the information about transmission from the terminal to the aggregation network, or the information about transmission from the aggregation network to the BNG. For example, a collection request packet 1 includes a TLV field 1, and a type field in the TLV field 1 indicates to obtain the information about transmission from the BNG to the aggregation network; a collection request packet 2 includes a TLV field 2, and a type field in the TLV field 1 indicates to obtain the information about transmission from the aggregation network to the terminal; a collection request packet 3 includes a TLV field 3, and a type field in the TLV field 3 indicates to obtain the information about transmission from the terminal to the aggregation network; and a collection request packet 4 includes a TLV field 4, and a type field in the TLV field 4 indicates to obtain the information about transmission from the aggregation network to the BNG.

In this case, a manner in which the network edge node sends, to the BNG based on the collection request packet, the information about transmission from the BNG to the aggregation network, the information about transmission from the aggregation network to the terminal, the information about transmission from the terminal to the aggregation network, or the information about transmission from the aggregation network to the BNG includes: changing a destination address of the collection reply packet to a source address of the collection request packet, changing the source address of the collection request packet to an address of the network edge node, changing a packet type of the collection request packet to a reply packet, adding the information about transmission from the BNG to the aggregation network, the information about transmission from the aggregation network to the terminal, the information about transmission from the terminal to the aggregation network, or the information about transmission from the aggregation network to the BNG to a value field in the TLV field, and obtaining the collection reply packet corresponding to the collection request packet; and sending the collection reply packet to the BNG. The collection reply packet is obtained by modifying the received collection request packet, and the recorded transmission information is returned to the BNG in a manner of sending the collection reply packet, so that an implementation in which the network edge node can return the recorded transmission information to the BNG is provided.

According to a third aspect, a transmission quality detection apparatus is provided. The apparatus is used for a BNG, and the BNG is connected to a terminal through at least one network including an aggregation network. The apparatus includes:
a transceiver module, configured to perform a receiving related operation and/or a sending related operation in the first aspect or any possible implementation of the first aspect; and
a processing module, configured to perform an operation other than the receiving related operation and/or the sending related operation in the first aspect or any possible implementation of the first aspect.

In a possible implementation, the transceiver module includes a receiving module and/or a sending module. The receiving module is configured to perform the receiving related operation, and the sending module is configured to perform the sending related operation.

In a possible implementation, the transceiver module is configured to obtain first transmission information and/or second transmission information, where the first transmission information includes information about transmission from the BNG to the aggregation network and information about transmission from the aggregation network to the terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, the second transmission information includes information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network; and the processing module is configured to detect hop-by-hop network transmission quality between the BNG and the terminal based on the first transmission information and/or the second transmission information.

In a possible implementation, the transceiver module is configured to: send a detection request packet to the terminal, where the detection request packet triggers the first network edge node to record the information about transmission from the BNG to the aggregation network, and triggers the second network edge node to record the information about transmission from the aggregation network to the terminal; and send a first collection request packet to the aggregation network, receive the information about transmission from the BNG to the aggregation network that is returned by the first network edge node based on the first collection request packet, and receive the information about transmission from the aggregation network to the terminal that is returned by the second network edge node based on the first collection request packet.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network.

In a possible implementation, the transceiver module is configured to: receive a detection reply packet returned by the terminal based on the detection request packet, where the detection reply packet triggers the third network edge node to record the information about transmission from the terminal to the aggregation network, and triggers the fourth network edge node to record the information about transmission from the aggregation network to the BNG; and send a second collection request packet to the aggregation network, receive the information about transmission from the terminal to the aggregation network that is returned by the third network edge node based on the second collection request packet, and receive the information about transmission from the aggregation network to the BNG that is returned by the fourth network edge node based on the second collection request packet.

In a possible implementation, the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network.

In a possible implementation, the processing module is further configured to: record sending information for sending the detection request packet and receiving information for receiving the detection reply packet, where the sending information includes at least one of a sending count and a sending time, and the receiving information includes at least one of a receiving count and a receiving time; and detect the hop-by-hop network transmission quality between the BNG and the terminal based on the sending information, the first transmission information, the second transmission information, and the receiving information.

In a possible implementation, the first collection request packet includes a first TLV field, and a type field in the first TLV field indicates that the first collection request packet is used to obtain the information about transmission from the BNG to the aggregation network or the information about transmission from the aggregation network to the terminal; and the second collection request packet includes a second TLV field, and a type field in the second TLV field indicates that the second collection request packet is used to obtain the information about transmission from the terminal to the aggregation network or the information about transmission from the aggregation network to the BNG.

In a possible implementation, if a protocol type of the terminal is PPPOE, both the detection request packet and the first collection request packet are echo request packets of an LCP; or if the protocol type of the terminal is IPOE V4, both the detection request packet and the first collection request packet are ARP request packets of an ARP; or if the protocol type of the terminal is IPOE V6, both the detection request packet and the first collection request packet are NS packets of an ND protocol.

In a possible implementation, the transceiver module is configured to send the detection request packet to the terminal based on a packet sending parameter, where the packet sending parameter includes at least one of a packet sending frequency, a packet sending quantity, a packet sending time interval, a packet length, and a packet priority, and the packet priority corresponds to a priority of the terminal.

In a possible implementation, the processing module is further configured to: disable a keepalive probe mechanism configured by the terminal, and stop sending, to the terminal, a keepalive probe packet corresponding to the keepalive probe mechanism.

In a possible implementation, the processing module is further configured to restart the keepalive probe mechanism configured by the terminal, and continue to send, to the terminal, a keepalive probe packet corresponding to the keepalive probe mechanism.

According to a fourth aspect, a transmission quality detection apparatus is provided. The apparatus is used for a network edge node in an aggregation network, and at least one network including the aggregation network is configured to connect a terminal and a BNG. The apparatus includes:
a transceiver module, configured to perform a receiving related operation and/or a sending related operation in the second aspect or any possible implementation of the second aspect; and
a processing module, configured to perform an operation other than the receiving related operation and/or the sending related operation in the second aspect or any possible implementation of the second aspect.

In a possible implementation, the transceiver module includes a receiving module and/or a sending module. The receiving module is configured to perform the receiving related operation, and the sending module is configured to perform the sending related operation.

In a possible implementation, the processing module is configured to: when a received packet meets a detection request condition, determine that the received packet is a detection request packet sent by the BNG to the terminal; and if the network edge node is located near the BNG side in the aggregation network, record information about transmission from the BNG to the aggregation network in first transmission information; or if the network edge node is located near the terminal side in the aggregation network, record information about transmission from the aggregation network to the terminal in the first transmission information; and when the received packet meets a detection reply condition, determine that the received packet is a detection reply packet sent by the terminal to the BNG; and if the network edge node is located near the terminal side in the aggregation network, record information about transmission from the terminal to the aggregation network in second transmission information; or if the network edge node is located near the BNG side in the aggregation network, record information about transmission from the aggregation network to the BNG in the second transmission information; and the transceiver module is configured to: when the received packet meets a collection request condition, determine that the received packet is a collection request packet sent by the BNG, and send, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

In a possible implementation, the detection request condition includes that a destination address is an address of the terminal, and a packet type is a request packet; the detection reply condition includes that a source address is an address of the terminal, and a packet type is a reply packet; and the collection request condition includes that a destination address is a reference multicast address, a packet type is a request packet, and the reference multicast address includes an address of a network node in a BD corresponding to the terminal.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network; and the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network.

In a possible implementation, if a protocol type of the terminal is PPPOE, both the detection request packet and the collection request packet are backhaul request packets of an LCP; or if the protocol type of the terminal is IPOE V4, both the detection request packet and the collection request packet are ARP request packets of an ARP; or if the protocol type of the terminal is IPOE V6, both the detection request packet and the collection request packet are NS packets of an ND protocol.

In a possible implementation, the collection request packet includes a TLV field, and a type field in the TLV field indicates that the collection request packet is used to obtain the information about transmission from the BNG to the aggregation network, the information about transmission from the aggregation network to the terminal, the information about transmission from the terminal to the aggregation network, or the information about transmission from the aggregation network to the BNG. The processing module is configured to: change a destination address of the collection reply packet to a source address of the collection request packet, change the source address of the collection request packet to an address of the network edge node, change a packet type of the collection request packet to a reply packet, add the information about transmission from the BNG to the aggregation network, the information about transmission from the aggregation network to the terminal, the information about transmission from the terminal to the aggregation network, or the information about transmission from the aggregation network to the BNG to a value field in the TLV field, and obtain the collection reply packet corresponding to the collection request packet; and the transceiver module is configured to send the collection reply packet to the BNG.

According to a fifth aspect, a network device is provided. The network device includes a processor, the processor is coupled to a memory, the memory stores at least one program instruction or code, and the at least one program instruction or the code is loaded and executed by the processor, to cause the network device to implement the transmission quality detection method according to either the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a transmission quality detection system is provided. The transmission quality detection system includes a BNG, at least one network edge node in an aggregation network, and a terminal, and the BNG is connected to the terminal through at least one network including the aggregation network; and
the BNG is configured to perform the method according to any one of the first aspect or the possible implementations of the first aspect, any one of the at least one network edge node is configured to perform the method according to any one of the second aspect or the possible implementations of the second aspect, and the terminal is configured to: receive a detection request packet sent by the BNG, and return a detection reply packet to the BNG based on the detection request packet.

According to a seventh aspect, a computer-readable storage medium is provided. The storage medium stores at least one instruction, and the instruction is loaded and executed by a processor, so that a computer implements the method according to any one of the first aspect or the possible implementations of the first aspect, or implements the method according to any one of the second aspect or the possible implementations of the second aspect.

According to an eighth aspect, a computer program (product) is provided. The computer program (product) includes computer program code; and when the computer program code is run by a computer, the computer is caused to perform the method according to the foregoing aspects.

According to a ninth aspect, a chip is provided. The chip includes a processor, configured to invoke and run instructions stored in the memory, so that a communication device on which the chip is installed performs the method according to the foregoing aspects.

According to a tenth aspect, another chip is provided. The chip includes an input interface, an output interface, a processor, and a memory. The input interface, the output interface, the processor, and the memory are connected to each other through an internal connection path. The processor is configured to execute code in the memory; and when the code is executed, the processor is configured to perform the method according to the foregoing aspects.

It should be understood that, for beneficial effect achieved by the technical solutions of the third aspect to the tenth aspect and corresponding possible implementations of the technical solutions of the third aspect to the tenth aspect of this application, refer to the technical effect of the first aspect and the second aspect and the corresponding possible implementations of the first aspect and the second aspect. Details are not described herein again.

### BRIEF DESCRIPTION OF DRAWINGS

FIG. 1 is a diagram of a network architecture accessed by a terminal according to an embodiment of this application;
FIG. 2 is a flowchart of a transmission quality detection method according to an embodiment of this application;
FIG. 3 is a diagram of a packet format of an echo packet according to an embodiment of this application;
FIG. 4 is a diagram of a packet format of an ARP packet according to an embodiment of this application;
FIG. 5 is a diagram of a packet format of an ICMP packet according to an embodiment of this application;
FIG. 6 is a diagram of a value field in a TLV according to an embodiment of this application;
FIG. 7 is a diagram of a packet format of another echo packet according to an embodiment of this application;
FIG. 8 is a diagram of a packet format of another ARP packet according to an embodiment of this application;
FIG. 9 is a diagram of a packet format of another ICMP packet according to an embodiment of this application;
FIG. 10 is a flowchart of another transmission quality detection method according to an embodiment of this application;
FIG. 11 is a diagram of a transmission quality detection method according to an embodiment of this application;
FIG. 12 is a diagram of a structure of a transmission quality detection apparatus according to an embodiment of this application;
FIG. 13 is a diagram of a structure of a network device according to an embodiment of this application; and
FIG. 14 is a diagram of a structure of another network device according to an embodiment of this application.

### DESCRIPTION OF EMBODIMENTS

To make the objectives, technical solutions, and advantages of this application clearer, the following further describes implementations of this application in detail with reference to the accompanying drawings.

As a conventional gateway device for accessing a broadband network, a BNG plays an important role in a scenario in which a user accesses the broadband network. With development of a software-defined networking (software designed network, SDN) technology and a network functions virtualisation (network function virtual, NFV) technology, a forwarding function and a control function of the BNG need to be decoupled, that is, a control (control) plane and a user (user) plane of the BNG are separated, namely, CU separation, to improve performance of the BNG. For a BNG after CU separation, the BNG may also be referred to as a virtual broadband network gateway (virtual broadband network gateway, vBNG). A vBNG system includes at least one control plane (control plane, CP) device and at least one user plane (user plane, UP) device. The CP device is configured to manage the at least one UP device, and any UP device is configured to forward traffic of a terminal device.

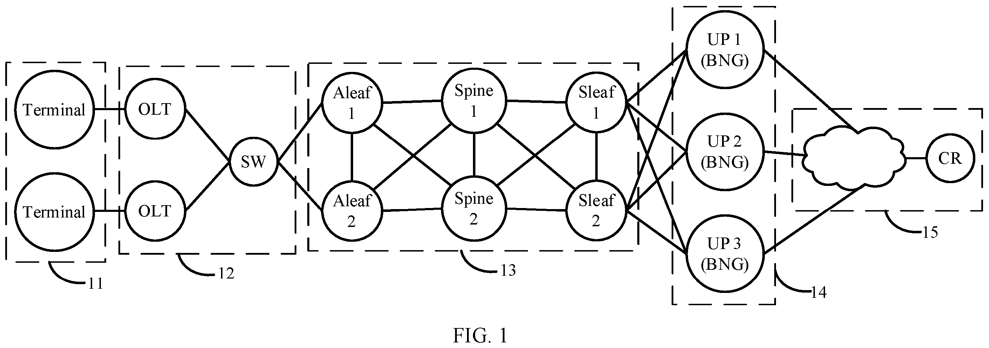

For example, FIG. 1 is a diagram of a network architecture accessed by a terminal according to an embodiment of this application. As shown in FIG. 1, the network architecture includes a terminal 11, an access network 12, an aggregation network 13, a BNG system 14, and a core network 15. For example, the terminal 11 may be an optical modem. The access network 12 may include an optical line terminal (optical line terminal, OLT) device and a switch (switch, SW) device. The SW device serves as a switching device, and can connect a plurality of terminals 11 to the aggregation network 13. The aggregation network 13 may include an access leaf (access leaf, aleaf) device, a spine (spine) device, and a service leaf (serve leaf, sleaf) device. The aleaf device and the sleaf device are network edge nodes in the aggregation network 13. The aleaf device is a network edge node, in the aggregation network 13, near a side of the terminal 11, and the sleaf device is a network edge node, in the aggregation network 13, near a side of the BNG system 14. The BNG system 14 may include a UP device, namely, a BNG. When the BNG system 14 uses a CU separation architecture, the BNG system 14 may further include a CP device. The core network 15 may include a core (core, CR) device.

In embodiments of this application, the terminal 11 accesses the core network 15 by using the BNG system 14, and the terminal 11 and the UP device in the BNG system 14 traverse a plurality of networks. As shown in FIG. 1, the terminal 11 reaches a gateway BNG through the access network 12 and the aggregation network 13. In a network running process, transmission quality deteriorates due to optical fiber aging or network faults. As a result, terminal services are damaged. Therefore, there is an urgent need to provide a method for detecting hop-by-hop network transmission quality between the BNG and the terminal, to perform repair in a timely manner when the transmission quality is not high.

In a related technology, whether any two network devices are reachable is determined by using a connectivity test program (packet internet groper, PING), and transmission quality is determined based on whether every two network devices are reachable. Alternatively, based on an operation, administration, and maintenance (operation, administration, and maintenance, OAM) technology, for example, an in-situ operation, administration, and maintenance (In-situ operation, administration, and maintenance, IOAM) technology or an in-situ flow information telemetry (in-situ flow information telemetry, IFIT) technology, real-time monitoring of a service level agreement (service level agreement, SLA) of a network is implemented, to determine transmission quality based on a real-time monitoring result.

However, some terminals may disable PING for the sake of security. After PING is disabled, the terminals discard echo request packets received through an interface under an internet control message protocol (internet control message protocol, ICMP). As a result, the transmission quality cannot be measured by using PING. For the IOAM technology and the IFIT technology, first, only transmission quality of an aggregation network between the aleaf and the sleaf can be detected, and transmission quality between the aleaf and the terminal or transmission quality between the sleaf and the BNG cannot be detected. Second, an emergency deployment can be performed only when an application is applied for by a terminal user. If devices of different vendors exist during the deployment, services may be affected, resulting in poor scenario limited universality. In addition, it is also necessary to rely on the terminal user to provide a destination address of a service and rely on the terminal to continue to have service traffic. However, after a fault occurs in an actual service, the terminal may have no service traffic to send. Consequently, transmission quality cannot be detected, and a manner of relying on service traffic also causes high costs of detecting the transmission quality.

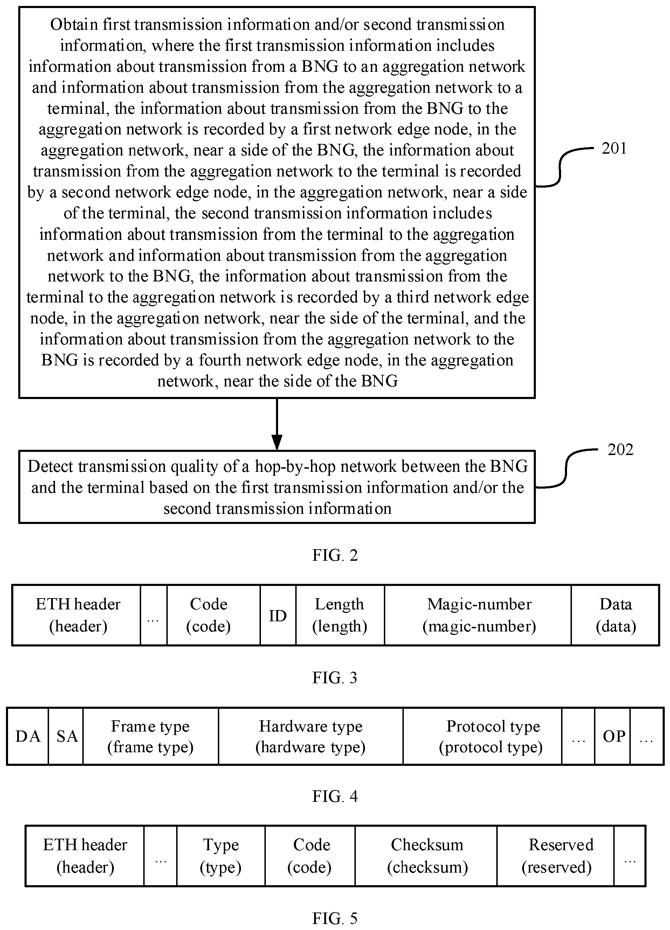

Embodiments of this application provide a transmission quality detection method, so that when a terminal disables PING, hop-by-hop network transmission quality between a BNG and the terminal can still be quickly detected. The method may be applied to a scenario in which the BNG is connected to the terminal through at least one network including an aggregation network. For example, the method is applied to the network architecture shown in FIG. 1, and the BNG is connected to the terminal through an access network and the aggregation network. In embodiments of this application, an example in which the BNG is connected to the terminal through the aggregation network is used for description. For a case in which the BNG is connected to the terminal through a plurality of networks including the aggregation network, refer to the implementation in which the BNG is connected to the terminal through the aggregation network provided in embodiments of this application. The BNG performing the method is used as an example. FIG. 2 is a flowchart of a transmission quality detection method according to an embodiment of this application. The transmission quality detection method includes but is not limited to the following step 201 and step 202.

Step 201: Obtain first transmission information and/or second transmission information, where the first transmission information includes information about transmission from a BNG to an aggregation network and information about transmission from the aggregation network to a terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, the second transmission information includes information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network.

In this embodiment of this application, because the BNG is connected to the terminal through at least one network including the aggregation network, all packets transmitted between the BNG and the terminal pass through the aggregation network. In this case, a network edge node in the aggregation network may record the corresponding first transmission information and/or the corresponding second transmission information based on a received or sent packet transmitted between the BNG and the terminal. The network edge node is a first-hop node on which a packet ingresses the aggregation network or a last-hop node on which a packet egresses the aggregation network. For example, an aleaf 1, an aleaf 2, a sleaf 1, and a sleaf 2 shown in FIG. 1 are all network edge nodes, the aleaf 1 and the aleaf 2 are network edge nodes, in the aggregation network, near the side of the terminal, and the sleaf 1 and the sleaf 2 are network edge nodes, in the aggregation network, near the side of the BNG.

In a possible implementation, the BNG may trigger, in a manner of sending a detection request packet to the terminal, the first network edge node and the second network edge node to record the first transmission information based on the received detection request packet; and trigger, in a manner in which the terminal returns a corresponding detection reply packet to the BNG based on the detection request packet, the third network edge node and the fourth network edge node to record the second transmission information based on the received detection reply packet. When the network edge node records the first transmission information and/or the second transmission information, the network edge node may actively report the recorded first transmission information and/or the recorded second transmission information to the BNG, or the BNG may request the recorded first transmission information and/or the recorded second transmission information from the network edge node.

Optionally, a manner of obtaining the first transmission information includes: The BNG sends a detection request packet to the terminal, where the detection request packet triggers the first network edge node to record the information about transmission from the BNG to the aggregation network, and triggers the second network edge node to record the information about transmission from the aggregation network to the terminal; and the BNG sends a first collection request packet to the aggregation network, receives the information about transmission from the BNG to the aggregation network that is returned by the first network edge node based on the first collection request packet, and receives the information about transmission from the aggregation network to the terminal that is returned by the second network edge node based on the first collection request packet. The detection request packet is sent to trigger the network edge node to record the first transmission information, and the first collection request packet is sent to trigger the network edge node to send the recorded first transmission information to the BNG, so that the first transmission information can be obtained without depending on service traffic.

In other words, when the BNG sends the detection request packet to the terminal through the aggregation network, the first network edge node near the BNG side in the aggregation network receives the detection request packet, so that the first network edge node can record, based on the received detection request packet, the information about transmission from the BNG to the aggregation network; and the second network edge node near the terminal side in the aggregation network also receives the detection request packet, so that the second network edge node can record, based on the received detection request packet, the information about transmission from the aggregation network to the terminal. The information about transmission from the BNG to the aggregation network may be information about transmission that the detection request packet ingresses the aggregation network, and the information about transmission from the aggregation network to the terminal may be information about transmission that the detection request packet egresses the aggregation network.

Optionally, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network. For example, the BNG sends a plurality of detection request packets to the terminal, the first network edge node records first input counts of the received detection request packets and a first input time of each received detection request packet, and the second network edge node records first output counts of the received detection request packets and a first output time of each received detection request packet. That is, the first transmission information includes an input/output count and an input/output time of the detection request packet that are recorded as the first transmission information, so that the BNG can detect, based on the first transmission information, transmission quality such as a packet loss rate and a delay of the hop-by-hop network in a direction from the BNG to the terminal.

In this embodiment of this application, the BNG may send the detection request packet to the terminal based on a packet sending parameter, where the packet sending parameter includes at least one of a packet sending frequency, a packet sending quantity, a packet sending time interval, a packet length, and a packet priority. The packet sending frequency, the packet sending quantity, the packet sending time interval, the packet length, and the packet priority all may be flexibly set based on an application scenario, so that transmission quality can be detected by sending the detection request packet to the terminal based on the packet sending parameter. For example, the packet sending quantity is 5, the packet sending time interval is 1 second, and the packet priority corresponds to a priority of the terminal, so that a detection request packet used to detect transmission quality of a same terminal matches a priority of a transmitted service packet.

Optionally, a manner of obtaining the second transmission information includes: The BNG receives a detection reply packet returned by the terminal based on the detection request packet, where the detection reply packet triggers the third network edge node to record the information about transmission from the terminal to the aggregation network, and triggers the fourth network edge node to record the information about transmission from the aggregation network to the BNG; and the BNG sends a second collection request packet to the aggregation network, receives the information about transmission from the terminal to the aggregation network that is returned by the third network edge node based on the second collection request packet, and receives the information about transmission from the aggregation network to the BNG that is returned by the fourth network edge node based on the second collection request packet. The detection reply packet returned by the terminal is received to trigger the network edge node to record the second transmission information, and the second collection request packet is sent to trigger the network edge node to send the recorded second transmission information to the BNG, so that the second transmission information can be obtained without depending on service traffic.

After the terminal receives the detection request packet sent by the BNG, the terminal returns the corresponding detection reply packet to the BNG through the aggregation network based on the detection request packet, and the third network edge node near the terminal side in the aggregation network receives the detection reply packet, so that the third network edge node can record, based on the received detection reply packet, the information about transmission from the terminal to the aggregation network; and the fourth network edge node near the BNG side in the aggregation network also receives the detection reply packet, so that the fourth network edge node can record, based on the received detection reply packet, the information about transmission from the aggregation network to the BNG. The information about transmission from the terminal to the aggregation network may be information about transmission that the detection reply packet ingresses the aggregation network, and the information about transmission from the aggregation network to the BNG may be information about transmission that the detection reply packet egresses the aggregation network. It should be noted that in this embodiment of this application, the first network edge node may be the same as or different from the third network edge node, and the second network edge node may be the same as or different from the fourth network edge node.

In a possible implementation, the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network. For example, the BNG sends a plurality of detection request packets to the terminal, and therefore, the terminal returns a plurality of detection reply packets to the BNG. The third network edge node records second input counts of the received detection reply packets and a second input time of each received detection reply packet, and the fourth network edge node records second output counts of the received detection reply packets and a second output time of each received detection reply packet. The input/output count and the input/output time of the detection reply packet are recorded as the second transmission information, so that transmission quality such as a packet loss rate and a delay of the hop-by-hop network in the direction from the terminal to the BNG can be detected based on the second transmission information. When both the first transmission information and the second transmission information are obtained, transmission quality such as a round-trip packet loss rate and a round-trip delay of the hop-by-hop network between the terminal and the BNG can be detected based on the first transmission information and the second transmission information.

A type of the detection request packet sent by the BNG is not limited in this embodiment of this application. A specific type of detection request packet to be used may be determined based on a protocol type used by the terminal, that is, terminals of different protocol types use different detection request packets. For example, if the protocol type of the terminal is PPPOE, the detection request packet may be an echo request packet of an LCP; or if the protocol type of the terminal is IPOE V4, the detection request packet may be an ARP request packet of an ARP; or if the protocol type of the terminal is IPOE V6, the detection request packet may be an NS packet of an ND protocol.

Because the detection request packet is a request packet defined in the LCP, the ARP, or the ND protocol, the terminal is also configured with the LCP, the ARP, or the ND protocol, after receiving the detection request packet, the terminal can return a corresponding detection reply packet based on a corresponding protocol, and the terminal can return the detection reply packet without performing additional configuration on the terminal. In other words, the detection reply packet corresponds to the detection request packet. When the detection request packet is an echo request packet, the detection reply packet is an echo reply packet; or when the detection request packet is an ARP request packet, the detection reply packet is an ARP reply packet; or when the detection request packet is an NS packet, the detection reply packet is an NA packet.

For example, with reference to a packet format of an echo packet shown in FIG. 3, the echo packet includes an ethernet (ethernet, ETH) header (header) field, a code (code) field, an identifier (identifier, ID) field, a length (length) field, a magic-number (magic-number) field, a data (data) field, and the like. The ETH header field includes a field indicating that the protocol type is the LCP; the code field indicates a request or a reply, where for example, a number 9 indicates an echo request, and a number 10 indicates an echo reply; the ID field is used for matching between the echo request and the echo reply, and the ID field increases by 1 each time one echo request is sent; the length field is a length of the entire echo packet; the magic-number field is used to avoid loopback; and content and a length of the data field are variable and may be self-defined.

With reference to a packet format of the ARP packet shown in FIG. 4. The ARP packet includes a destination address (destination address, DA) field, a sender address (sender address, SA) field, a frame type (frame type) field, a hardware type (hardware type) field, a protocol type (protocol type) field, an operation (operation, OP) field, and the like. The frame type field indicates a type of an ARP packet, and for an ARP request or reply, a value of the field is 0x0806; the hardware type field indicates a type of a hardware address, and for an ethernet, a value of the field is 1; the protocol type field indicates a type of a protocol address to be mapped by a sender; and the OP field indicates an operation type, where for example, a number 1 indicates the ARP request, and a number 2 indicates the ARP reply.

With reference to a packet format of an ICMP packet shown in FIG. 5, the ICMP packet includes an ethernet (ethernet, ETH) header field, a type (type) field, a code (code) field, a checksum (checksum) field, a reserved (reserved) field, and the like. The ETH header field includes a field indicating that the protocol type is the LCP; the code field indicates a request or a reply, where for example, the field whose value is 135 indicates an NS packet, and the field whose value is 136 indicates an NA packet; the checksum field is used to check data integrity in the ICMP packet; and the reserved field is not used.

In this embodiment of this application, types of the first collection request packet and the second collection request packet are not limited. A new packet type used to collect transmission information may be defined, or may be determined based on the protocol type, namely, the echo request packet of the LCP, the ARP request packet of the ARP, or the NS packet of the ND protocol, used by the terminal. Because the collection request packet is sent to the aggregation network, a destination address of the collection request packet may be a reference multicast address, and the reference multicast address includes an address of a network node in a BD corresponding to the terminal, so that all network nodes, in the aggregation network, configured to connect the BNG to the terminal can receive the collection request packet sent by the BNG.

In a possible implementation, the first collection request packet includes a first TLV field, and a type field in the first TLV field indicates that the first collection request packet is used to obtain the information about transmission from the BNG to the aggregation network or the information about transmission from the aggregation network to the terminal; and the second collection request packet includes a second TLV field, and a type field in the second TLV field indicates that the second collection request packet is used to obtain the information about transmission from the terminal to the aggregation network or the information about transmission from the aggregation network to the BNG.

Optionally, this embodiment of this application provides eight types of TLVs. The eight types of TLVs are respectively used to obtain eight types of transmission information, and the eight types of transmission information are respectively the first input count, the first input time, the first output count, the first output time, the second input count, the second input time, the second output count, and the second output time. The TLV field is carried in the collection request packet, and the type field in the TLV field indicates a specific piece of transmission information that is obtained, so that the collection request packet can accurately obtain the transmission information as required. Because different transmission information is recorded by different network edge nodes, collection request packets carrying different TLV fields are sent, so that different network edge nodes can be triggered to separately return corresponding transmission information.

For example, Type 1: The type field corresponds to 1, and the value field indicates the first input count. For example, if the TLV of the type 1 is in the echo request packet corresponding to the PPPOE, the value field is a statistical count of the echo request packet received by the first network edge node. Type 2: The type field corresponds to 2, and the value field indicates the first output count. For example, if the TLV of the type 2 is in the echo request packet corresponding to the PPPOE, the value field is a statistical count of the echo request packet sent by the second network edge node. Type 3: The type field corresponds to 3, and the value field indicates the second input count. For example, if the TLV of the type 3 is in the echo reply packet corresponding to the PPPOE, the value field is a statistical count of the echo reply packet received by the third network edge node. Type 4: The type field corresponds to 4, and the value field indicates the second output count. For example, if the TLV of the type 4 is in the echo reply packet corresponding to the PPPOE, the value field is a statistical count of the echo reply packet sent by the fourth network edge node. Formats of the value fields of the TLVs of the type 1 to the type 4 may be 32-bit integers.

Type 5: The type field corresponds to 5, and the value field indicates the first input time. Because there are a plurality of detection request packets, there are also a plurality of recorded timestamps of the detection request packets, that is, the first input time includes a time corresponding to each of the plurality of detection request packets received by the first network edge node. Type 6: The type field corresponds to 6, and the value field indicates the first output time. Similarly, the first output time includes a time corresponding to each of a plurality of detection request packets sent by the second network edge node. Type 7: The type field corresponds to 7, and the value field indicates the second input time. Similarly, the second input time includes a time corresponding to each of a plurality of detection reply packets received by the third network edge node. Type 8: The type field corresponds to 8, and the value field indicates the second output time. Similarly, the second output time includes a time corresponding to each of a plurality of detection reply packets sent by the fourth network edge node.

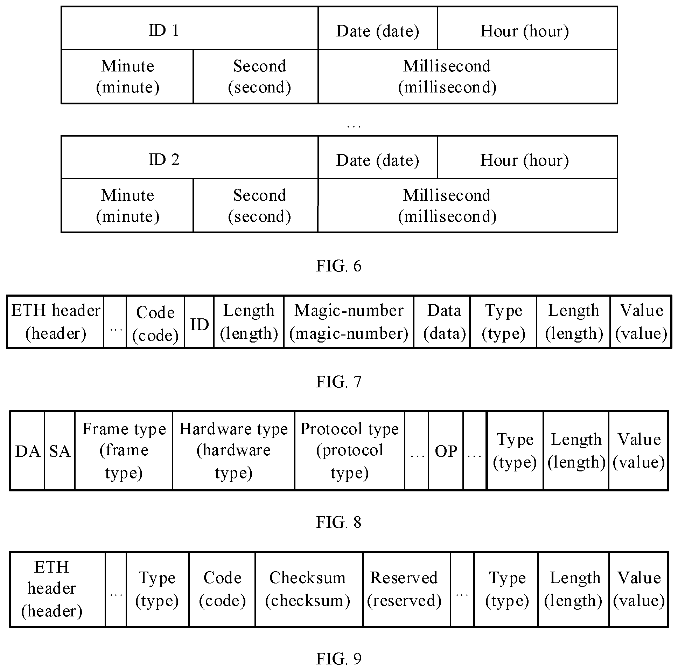

Formats of the value fields of the TLVs of the type 5 to the type 8 are similar. The value field of the TLV of the type 5 is used as an example. The format of the value field includes a plurality of 8-byte combinations, and an 8-byte corresponds to an input time of one detection request packet. As shown in FIG. 6, each 8-byte includes an ID field, a date (date) field, an hour (hour) field, a minute (minute, min) field, a second (second, s) field, and a millisecond (millisecond, ms) field. The ID field indicates a packet sequence number of the detection request packet, and the date field, the hour field, the minute field, the second field, and the millisecond field indicate a receiving time of the detection request packet whose packet sequence number is ID.

For example, one collection request packet may carry at least one type of TLV. When the collection request packet is the echo request packet of the LCP, FIG. 7 is a diagram of a packet format of a collection request packet according to an embodiment of this application. Compared with FIG. 3, a TLV field is added as an extension. When the collection request packet is the ARP request packet, FIG. 8 is a diagram of a packet format of another collection request packet according to an embodiment of this application. Compared with FIG. 4, a TLV field is added as an extension. When the collection request packet is the NS packet, FIG. 9 is a diagram of a packet format of another ICMP packet according to an embodiment of this application, namely, a diagram of a packet format of the NS packet. Compared with FIG. 5, a TLV field is added as an extension.

In this embodiment of this application, the transmission quality detection scenario may be a home broadband user scenario, and the terminal may be an optical modem. Because a plurality of terminals access the network through the BNG, the BNG manages bandwidth access of the plurality of terminals. When a specific terminal is faulty, user information of the terminal may be input into the BNG, so that the BNG finds the corresponding terminal based on the user information, and further detects the hop-by-hop network transmission quality between the BNG and the terminal. For example, before the first transmission information and/or the second transmission information are/is obtained, a terminal whose transmission quality is to be detected is determined based on user information, and the user information may include at least one of a medium access control (medium access control, MAC) address, an internet protocol (internet protocol, IP) address, or a virtual private network (virtual private network, VPN) identifier.

Optionally, when the first transmission information is obtained by sending the detection request packet to the terminal, before sending the detection request packet to the terminal, the BNG may first disable a keepalive probe mechanism configured by the terminal, and stop sending, to the terminal, a keepalive probe packet corresponding to the keepalive probe mechanism. In this way, in a period of detecting the hop-by-hop network transmission quality between the BNG and the terminal, the detection request packet sent by the BNG to the terminal does not include the keepalive probe packet, that is, the obtained first transmission information is not interfered by the keepalive probe mechanism of the terminal. This improves accuracy of the obtained first transmission information. Because the keepalive probe packet is not sent, there is no reply packet corresponding to the keepalive probe packet, that is, the obtained second transmission information is not interfered by the keepalive probe mechanism of the terminal. This also improves accuracy of the obtained second transmission information, and further improves accuracy of the detected hop-by-hop network transmission quality. The keepalive probe mechanism includes a point-to-point protocol (point-to-point protocol, PPP) probing mechanism, an ARP probing mechanism, an ND probing mechanism, or the like.

Step 202: Detect the hop-by-hop network transmission quality between the BNG and the terminal based on the first transmission information and/or the second transmission information.

In this embodiment of this application, when the first transmission information is obtained, because the first transmission information includes the information about transmission from the BNG to the aggregation network and the information about transmission from the aggregation network to the terminal, hop-by-hop network transmission quality in a direction from the BNG to the terminal may be detected based on the first transmission information. When the second transmission information is obtained, because the second transmission information includes the information about transmission from the terminal to the aggregation network and the information about transmission from the aggregation network to the BNG, hop-by-hop network transmission quality in a direction from the terminal to the BNG may be detected based on the second transmission information. In addition, when the first transmission information and the second transmission information are/is obtained, round-trip hop-by-hop network transmission quality between the BNG and the terminal may be detected based on the first transmission information and the second transmission information. Optionally, the transmission quality may include a quantity of lost packets, a packet loss rate, a delay, a jitter, or the like.

In a possible implementation, the BNG may further record, when sending the detection request packet, sending information for sending the detection request packet, and record, when receiving the detection reply packet, receiving information for receiving the detection reply packet. The sending information includes at least one of a sending count and a sending time, and the receiving information includes at least one of a receiving count and a receiving time. In this case, in addition to the detecting the hop-by-hop network transmission quality between the BNG and the terminal based on the first transmission information and the second transmission information, end-to-end transmission quality between the BNG and the terminal may be detected based on the sending information and the receiving information. Therefore, transmission quality between the terminal and the BNG, transmission quality between the terminal and the aggregation network, transmission quality inside the aggregation network, and transmission quality between the aggregation network and the BNG can be detected based on the sending information, the first transmission information, the second transmission information, and the receiving information.

For example, if the first transmission information includes the first input time and the first output time, the second transmission information includes the second input time and the second output time, a calculated first round-trip delay between the terminal and an aggregation network aleaf side is a time difference between the second input time and the first output time, a calculated second round-trip delay between the terminal and an aggregation network sleaf side is a time difference between the second output time and the first input time, and a calculated third round-trip delay between the terminal and the BNG is a time difference between a receiving time and a sending time, a fourth round-trip delay between the aggregation network sleaf side and the BNG is a time difference between the third round-trip delay and the second round-trip delay, and a fifth round-trip delay between the aggregation network aleaf side and the aggregation network sleaf side is a time difference between the second round-trip delay and the first round-trip delay.

Before the BNG sends the detection request packet to the terminal, the BNG disables the keepalive probe mechanism configured by the terminal, and stops sending, to the terminal, a keepalive probe packet corresponding to the keepalive probe mechanism. Then, after detecting the hop-by-hop network transmission quality between the BNG and the terminal based on the first transmission information and/or the second transmission information, the BNG may restart the keepalive probe mechanism configured by the terminal, and continue to send, to the terminal, a keepalive probe packet corresponding to the keepalive probe mechanism, to restore implementation of an original keepalive probe mechanism.

According to the method provided in this embodiment of this application, because the obtained first transmission information and/or the obtained second transmission information are/is transmission information of the hop-by-hop network between the BNG and the terminal, the hop-by-hop network transmission quality between the BNG and the terminal can be detected based on the first transmission information and/or the second transmission information, to be specific, not only transmission quality between the terminal and the aggregation network can be detected, but also transmission quality between the aggregation network and the BNG can be detected, so that the hop-by-hop network transmission quality between the BNG and the terminal can be obtained. In this way, when a network fault occurs, whether the network fault occurs between the terminal and the aggregation network, inside the aggregation network, between the aggregation network and the BNG, or inside the BNG can be quickly demarcated based on the hop-by-hop network transmission quality. In addition, the method does not require cooperation of the terminal, and is not subject to configurations of the terminal or whether the terminal has service traffic. Therefore, operation and maintenance efficiency is high, and implementation is simple and quick.

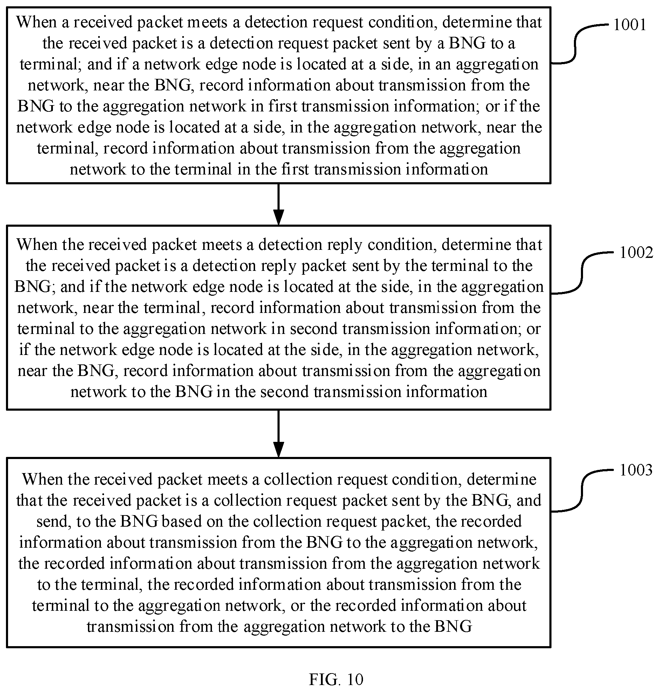

A network edge node in an aggregation network performing the method is used as an example, and at least one network including the aggregation network is configured to connect a terminal and a BNG. FIG. 10 is a flowchart of another transmission quality detection method according to an embodiment of this application. As shown in FIG. 10, the transmission quality detection method includes the following step 1001 to step 1003.

Step 1001: When a received packet meets a detection request condition, determine that the received packet is a detection request packet sent by a BNG to a terminal; and if a network edge node is located near the BNG side in an aggregation network, record information about transmission from the BNG to the aggregation network in first transmission information; or if the network edge node is located near the terminal side in the aggregation network, record information about transmission from the aggregation network to the terminal in the first transmission information.

In this embodiment of this application, the detection request condition identifies the detection request packet. Optionally, the detection request condition may include that a destination address is an address of the terminal, and a packet type is a request packet. The detection request condition is used, so that the network edge node can identify the detection request packet, and the information about transmission from the BNG to the aggregation network or the information about transmission from the aggregation network to the terminal can be recorded based on the detection request packet.

Step 1002: When the received packet meets a detection reply condition, determine that the received packet is a detection reply packet sent by the terminal to the BNG; and if the network edge node is located near the terminal side in the aggregation network, record information about transmission from the terminal to the aggregation network in second transmission information; or if the network edge node is located near the BNG side in the aggregation network, record information about transmission from the aggregation network to the BNG in the second transmission information.

In this embodiment of this application, the detection reply condition identifies the detection reply packet. Optionally, the detection reply condition may include that a source address is an address of the terminal, and a packet type is a reply packet. The detection reply condition is used, so that the network edge node can identify the detection reply packet, and the information about transmission from the terminal to the aggregation network or the information about transmission from the aggregation network to the BNG can be recorded based on the detection reply packet.

Step 1003: When the received packet meets a collection request condition, determine that the received packet is a collection request packet sent by the BNG, and send, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

In this embodiment of this application, the collection request condition identifies the collection request packet. Optionally, the collection request condition includes that a destination address is a reference multicast address, a packet type is a request packet, and the reference multicast address includes an address of a network node in a BD corresponding to the terminal. The collection request condition is used, so that the network edge node can identify the collection request packet, and can return, to the BNG based on the collection request packet, the recorded information about transmission from the terminal to the aggregation network, the recorded information about transmission from the aggregation network to the BNG, the recorded information about transmission from the terminal to the aggregation network, or the recorded information about transmission from the aggregation network to the BNG. Optionally, after receiving the collection request packet, the network edge node generates and returns the collection reply packet to the BNG if to-be-collected transmission information of the collection request packet is locally recorded. Optionally, if the to-be-collected transmission information of the collection request packet is not recorded, no processing is performed. For example, the collection request packet is directly discarded.

For example, according to the foregoing three different protocols used by the terminal, a network edge node in a BD domain in which the terminal is located enables the transmission quality detection method provided in this embodiment of this application, and the following nine packet capturing rules may be configured on a forwarding plane of the network edge node that enables the method. Each time the forwarding plane receives or sends a packet, the forwarding plane may match the packet with the nine packet capturing rules, and copies a packet that matches any one of the nine packet capturing rules and sends the packet to a control plane of the network edge node. An effective time of the packet capturing rule can be flexibly configured. For example, if the effective time of the packet capturing rule is 30 minutes, the forwarding plane performs packet capturing according to the following nine packet capturing rules within 30 minutes after the method is enabled. After 30 minutes, the nine packet capturing rules become invalid, and the forwarding plane does not perform packet capturing according to the following nine packet capturing rules.

The nine packet capturing rules are as follows: Rule 1: A destination MAC address is a MAC address of the terminal, and a packet type is an echo request packet of an LCP. Rule 2: A source MAC address is a MAC address of the terminal, and a packet type is an echo reply packet of an LCP. Rule 3: A destination MAC address is a MAC address of the terminal, and a packet type is an ARP request packet. Rule 4: A source MAC address is a MAC address of the terminal, and a packet type is an ARP reply packet. Rule 5: A destination MAC address is a MAC address of the terminal, and a packet type is an ICMP request packet, that is, a code field of the packet is 135. Rule 6: A destination MAC address is a MAC address of the terminal, and a packet type is an ICMP reply packet, that is, a code field of the packet is 136. Rule 7: A destination MAC address is a MAC address of the reference multicast, and a packet type corresponds to PPPOE. Rule 8: A destination MAC address is a MAC address of the reference multicast, and a packet type corresponds to an ARP protocol. Rule 9: A destination MAC address is a MAC address of the reference multicast, and a packet type corresponds to an ICMP.

The rule 1, the rule 3, and the rule 5 correspond to the detection request condition in this embodiment of this application, the rule 2, the rule 4, and the rule 6 correspond to the detection reply conditions in this embodiment of this application, and the rule 7, the rule 8, and the rule 9 correspond to the collection request condition in this embodiment of this application. After the forwarding plane copies the packet that matches any one of the nine packet capturing rules and sends the packet to the control plane, the control plane receives the packet sent, and determines whether the packet is a detection packet or a collection request packet based on whether destination MAC is multicast or unicast. If the packet is the detection packet, the control plane further determines whether the packet is a detection request packet or a detection reply packet based on a type identifier in the detection packet.

For the detection request packet, a packet count, a timestamp, a first input count, and a first input time of the detection request packet ingress to the aggregation network are recorded, and a packet count, a timestamp, a first output count, and a first output time of the detection request packet egress from the aggregation network are recorded. For the detection reply packet, a packet count, a timestamp, a second input count, and a second input time of the detection reply packet ingress to the aggregation network are recorded, and a packet count, a timestamp, a second output count, and a second output time of the detection reply packet egress from the aggregation network are recorded. IDs of detection request packets corresponding to a same terminal in a same direction are all accumulated from 1, and IDs of detection reply packets corresponding to a same terminal in a same direction are all accumulated from 1. For example, an ID of a first detection request packet that is destined for the terminal and that ingresses the aggregation network starts counting from 1, and an ID of a subsequent detection request packet, of a same type, that is destined for the terminal and that ingresses the aggregation network increases sequentially.

In this embodiment of this application, after recording the corresponding first transmission information and/or the corresponding second transmission information, the network edge node performs aging processing on a cache that records the first transmission information and/or the second transmission information. Optionally, an aging time of the cache that records the first transmission information and/or the second transmission information is set. When the aging time expires, the cached first transmission information and/or the cached second transmission information are/is deleted. The aging time may be started after the first collection request packet is received, or may be started after a first collection reply packet is sent. A condition for starting the aging time is not limited in this embodiment of this application. The aging time may be set based on experience or flexibly adjusted based on an application scenario. For example, the aging time is 5 minutes. In addition, within the aging time, the cache that records the first transmission information and/or the second transmission information may alternatively be manually cleared, or the cache that records the first transmission information and/or the second transmission information is triggered to be cleared by a deletion operation of the packet capturing rule.

In a possible implementation, the collection request packet includes a TLV field, and a type field in the TLV field indicates that the collection request packet is used to obtain the information about transmission from the BNG to the aggregation network, the information about transmission from the aggregation network to the terminal, the information about transmission from the terminal to the aggregation network, or the information about transmission from the aggregation network to the BNG. For example, a collection request packet 1 includes a TLV field 1, and a type field in the TLV field 1 indicates to obtain the information about transmission from the BNG to the aggregation network; a collection request packet 2 includes a TLV field 2, and a type field in the TLV field 1 indicates to obtain the information about transmission from the aggregation network to the terminal; a collection request packet 3 includes a TLV field 3, and a type field in the TLV field 3 indicates to obtain the information about transmission from the terminal to the aggregation network; and a collection request packet 4 includes a TLV field 4, and a type field in the TLV field 4 indicates to obtain the information about transmission from the aggregation network to the BNG.

In this case, a manner in which the network edge node sends, to the BNG based on the collection request packet, the information about transmission from the BNG to the aggregation network, the information about transmission from the aggregation network to the terminal, the information about transmission from the terminal to the aggregation network, or the information about transmission from the aggregation network to the BNG includes: changing a destination address of the collection reply packet to a source address of the collection request packet, changing the source address of the collection request packet to an address of the network edge node, changing a packet type of the collection request packet to a reply packet, adding the information about transmission from the BNG to the aggregation network, the information about transmission from the aggregation network to the terminal, the information about transmission from the terminal to the aggregation network, or the information about transmission from the aggregation network to the BNG to a value field in the TLV field, and obtaining the collection reply packet corresponding to the collection request packet; and sending the collection reply packet to the BNG. The collection reply packet is obtained by modifying the received collection request packet, and the recorded transmission information is returned to the BNG in a manner of sending the collection reply packet, so that an implementation in which the network edge node can return the recorded transmission information to the BNG is provided.

For example, for eight TLVs that may be carried in the collection request packet, if TLVs carried in the collection request packet are a type 1 to a type 4, corresponding packet counts are used to fill a value field based on the TLV types, and a collection reply packet carrying the packet counts is generated and sent, where a packet count corresponding to the type 1 is the first input count, a packet count corresponding to the type 2 is the first output count, a packet count corresponding to the type 3 is the second input count, and a packet count corresponding to the type 4 is the second output count. If TLVs carried in the collection request packet are a type 5 to a type 8, corresponding timestamps are used to fill a value field based on IDs included in the value field in the TLV types, where one TLV includes one ID, and one ID corresponds to one packet. After the timestamps are filled in the IDs in all the TLVs, a collection reply packet carrying the timestamps is generated and sent, where a timestamp corresponding to the type 4 is the first input time, a timestamp corresponding to the type 6 is the first output time, a timestamp corresponding to the type 7 is the second input time, and a timestamp corresponding to the type 8 is the second output time.

In comparison with the collection request packet, a system MAC address of a local network edge node is used as the source MAC address of the collection reply packet, the source MAC address of the collection request packet is used as the destination MAC address, and the packet type is modified from the request type to the reply type. For example, for an echo request packet of an LCP of PPPOE, a value of a code field is modified to a reply type; for an ARP request packet of IPOE V4, a de value of an op field is modified to a reply type; and for an NS packet of IPOE V6, a de value of a code field is modified to 136 in an NA packet.

The network edge node in the method may record and return the information about transmission from the BNG to the aggregation network, the information about transmission from the aggregation network to the terminal, the information about transmission from the terminal to the aggregation network, or the information about transmission from the aggregation network to the BNG, so that the BNG can obtain the first transmission information and/or the second transmission information. Because the first transmission information and/or the second transmission information are/is transmission information of a hop-by-hop network between the BNG and the terminal, the BNG may detect, based on the first transmission information and/or the second transmission information, hop-by-hop network transmission quality between the BNG and the terminal, that is, may detect not only transmission quality between the terminal and the aggregation network, but also transmission quality between the aggregation network and the BNG. In this way, when a network fault occurs, whether the network fault occurs between the terminal and the aggregation network, inside the aggregation network, between the aggregation network and the BNG, or inside the BNG can be quickly demarcated based on the hop-by-hop network transmission quality. In addition, the method does not require cooperation of the terminal, and is not subject to configurations of the terminal or whether the terminal has service traffic. Therefore, operation and maintenance efficiency is high, and implementation is simple and quick.

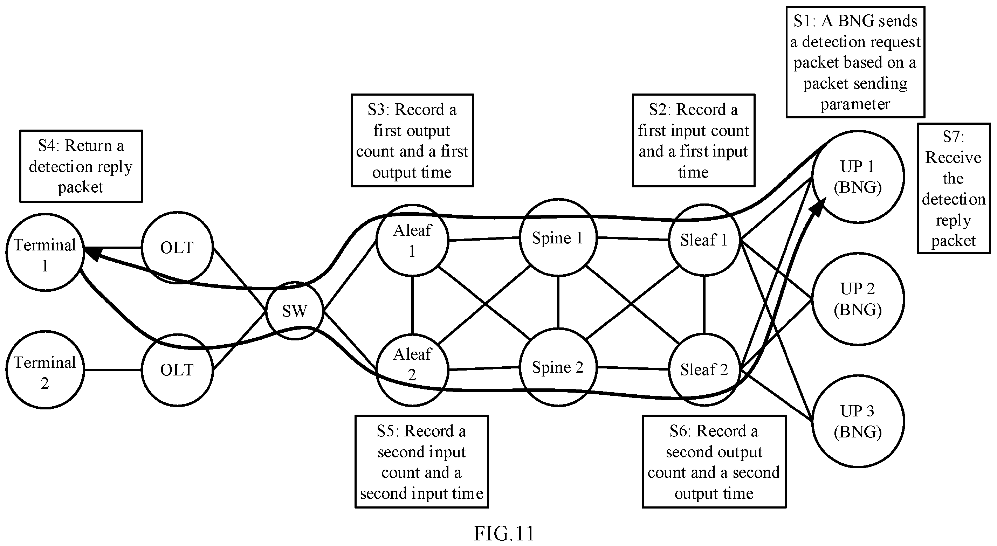

An example in which the BNG, the first network edge node, the second network edge node, the third network edge node, the fourth network edge node, and the terminal interact to perform the method is used below for description. As shown in FIG. 11, detection of hop-by-hop network transmission quality between a BNG and a terminal 1 is used as an example. A BD in which the terminal 1 is located configures a user-check usermac <XX-XX-XX> enable [timeout <x>] [multicast-mac <XX-XX-XX>] command, and delivers the foregoing nine packet capturing rules on an interface bound to the BD. Optionally, a timeout time of the nine packet capturing rules is set to 30 minutes. A MAC address range of reference multicast is 01-00-5e-00-00-00 to 01-00-5e-00-00-ff. For example, 1-00-5e-01-01-01 is used by default. A ping user user-ip X.X.X.X [-vpnname <vpnname>] [-count <number>] [-interval <time>] [-pri <0-7>] [-len <0-1400>] command is performed on the BNG, and user information such as a private IP address and a VPN of the to-be-detected terminal 1 and packet sending parameters such as a packet sending quantity, a packet sending time interval, and a packet length are set. Then, the terminal 1 is found based on the input user information, and a normal keepalive probe mechanism of the terminal 1 is first stopped based on a protocol type of the terminal 1. Further, a transmission quality detection function of the terminal 1 is enabled on the BNG.

S1: The BNG sends a detection request packet based on the packet sending parameter. Each time one detection request packet is sent, a sending count and a sending time are recorded.

S2: A sleaf1 node determines, according to a packet capturing rule, that the detection request packet is received, and then records a first input count and a first input time of the detection request packet for an ingress direction based on the detection request packet. The sleaf1 node corresponds to the first network edge node.

PPPOE is used as an example. If the sleaf1 node captures an echo request packet of an LCP in an interface ingress direction, the sleaf1 node adds statistics about the first input count and the first input time. Each time one echo request packet of the LCP is captured, the first input count increases by 1 from 1. For example, each time one echo request packet of the LCP is captured, the sleaf1 node adds a record shown in Table 1, where a packet ID corresponds to the first input count, and a timestamp corresponds to the first input time.

**Table 1**

| Type | Packet ID | Timestamp |
|---|---|---|
| Ingress direction of the detection request packet | Accumulated value of a packet count | Date/Hour/Minute/Second/Millisecond |

S3: An aleaf1 node determines, according to the packet capturing rule, that the detection request packet is received, and then records a first output count and a first output time of the detection request packet for an egress direction based on the detection request packet. The aleaf1 node corresponds to the second network edge node.

PPPOE is used as an example. If the aleaf1 node captures an echo request packet of an LCP in an interface egress direction, the aleaf1 node adds statistics about the first output count and the first output time. Each time one echo request packet of the LCP is captured, the first output count increases by 1 from 1. For example, each time one echo request packet of the LCP is captured, the aleaf1 node adds a record shown in Table 2, where a packet ID corresponds to the first output count, and a timestamp corresponds to the first output time.

**Table 2**

| Type | Packet ID | Timestamp |
|---|---|---|
| Egress direction of the detection request packet | Accumulated value of a packet count | Date/Hour/Minute/Second/Millisecond |

S4: After receiving the detection request packet, the terminal 1 returns a detection reply packet based on the detection request packet.

S5: An aleaf2 node determines, according to the packet capture rule, that the detection reply packet is received, and then records a second input count and a second input time of the detection reply packet for an ingress direction based on the detection reply packet. The aleaf2 node corresponds to the third network edge node.

PPPOE is used as an example. If the aleaf2 node captures an echo reply packet of an LCP in an interface ingress direction, the aleaf2 node adds statistics about the second input count and the second input time. Each time one echo reply packet of the LCP is captured, the second input count increases by 1 from 1. For example, each time one echo request packet of the LCP is captured, the aleaf2 node adds a record shown in Table 3, where a packet ID corresponds to the second input count, and a timestamp corresponds to the second input time.

**Table 3**

| Type | Packet ID | Timestamp |
|---|---|---|
| Ingress direction of the detection reply packet | Accumulated value of a packet count | Date/Hour/Minute/Second/Millisecond |

S6: A sleaf2 node determines, according to the packet capturing rule, that the detection request packet is received, and then records a second output count and a second output time of the detection request packet for an egress direction based on the detection request packet. The sleaf2 node corresponds to the fourth network edge node.

PPPOE is used as an example. If the sleaf2 node captures an echo reply packet of an LCP in an interface egress direction, the sleaf2 node adds statistics about the second output count and the second output time. Each time one echo reply packet of the LCP is captured, the second output count increases by 1 from 1. For example, each time one echo reply packet of the LCP is captured, the sleaf2 node adds a record shown in Table 4, where a packet ID corresponds to the second output count, and a timestamp corresponds to the second output time.

**Table 4**

| Type | Packet ID | Timestamp |
|---|---|---|
| Egress direction of the detection reply packet | Accumulated value of a packet count | Date/Hour/Minute/Second/Millisecond |

S7: The BNG receives the detection reply packet. Each time one detection reply packet is received, a receiving count and a receiving time are recorded.

In this embodiment of this application, after sending the detection request packet of the set quantity of sent packets, the BNG calculates an end-to-end packet loss rate based on the recorded sending count and the recorded receiving count, where end-to-end packet loss rate=(sending count-receiving count)/sending count; and calculates an end-to-end delay based on the sending time of the detection request packet and the receiving time of a detection reply packet corresponding to the detection request packet, where end-to-end delay=receiving time of the detection reply packet-sending time of the detection request packet.

S8: After sending the detection request packet of the set quantity of sent packets, the BNG sends the collection request packet used to obtain corresponding transmission information.

Each collection request packet includes at least one type of TLV, and one type of TLV is used to obtain one type of transmission information. For descriptions of the eight types of TLVs, refer to the foregoing related descriptions. Details are not described herein again. For example, when the end-to-end packet loss rate is 0, the BNG sequentially sends eight collection request packets of a type 1 to a type 8; or when the end-to-end packet loss rate is greater than 0, the BNG sequentially sends four collection request packets of a type 1 to a type 4. Optionally, after the detection request packet of the set quantity of sent packets is sent, the collection request packet may be sent after a reference time, so that the detection reply packet can be transmitted within the delayed reference time. The reference time may be flexibly defined based on an application scenario. For example, the reference time is 5 seconds.

Because lengths of collection reply packets corresponding to collection request packets of the type 5 to the type 8 are limited, a quantity of timestamps that can be carried in each collection reply packet is also limited. For example, a request packet of an existing protocol is used as the collection request packet. For PPPOE and IPOE V6, timestamps corresponding to 100 packet IDs can be collected for one collection reply packet at a time. For IPOE V4, timestamps corresponding to two packet IDs can be collected for one collection reply packet at a time. If timestamps corresponding to more packet IDs need to be collected, the BNG needs to send more collection request packets.

S9: The sleaf1 node, the aleaf1 node, the aleaf2 node, or the sleaf2 node determines, according to the packet capturing rule, that the collection request packet is received, and then determines the collected transmission information based on the TLV type in the collection request packet. If the transmission information corresponding to the TLV type exists in a local cache, the transmission information is filled in a value field of the TLV, and a collection reply packet is returned. If the local cache does not have the transmission information corresponding to the TLV type, the collection reply packet is discarded, that is, no reply is given to the collection reply packet.

S10: The BNG receives the collection reply packets respectively returned by the sleaf1 node, the aleaf1 node, the aleaf2 node, and the sleaf2 node, obtains the first transmission information and the second transmission information based on transmission information carried in the collection reply packets, and collects statistics on hop-by-hop network transmission quality between the terminal 1 and the BNG based on the first transmission information and the second transmission information.

The transmission quality including a packet loss rate is used as an example. For the collection reply packets of the TLVs of the type1 to the type 4, a record node is determined based on source MAC addresses of the collection reply packets, and the record node, a data type (type), and a packet count (count) are displayed in a summary manner, as shown in a packet loss statistics summary table in Table 5. It may be seen from Table 5 that no packet loss occurs in the hop-by-hop network between the BNG and the terminal 1, and the packet loss rate is 0.

**Table 5**

| Record node | Type | Count |
|---|---|---|
| Local | Sending of the detection request packet | 1000 |
| Sleaf 1 | Detection request packet ingress to the aggregation network | 1000 |
| Aleaf 1 | Detection request packet egress from the aggregation network | 1000 |
| Aleaf 2 | Detection reply packet ingress to the aggregation network | 1000 |
| Sleaf 2 | Detection reply packet egress from the aggregation network | 1000 |
| Local | Receiving of the detection reply packet | 1000 |

The transmission quality including a delay is used as an example. For collection reply packets of TLVs of the type 5 to the type 8, a record node is determined based on a source MAC address of the collection reply packet, and the record node, a data type (type), a packet ID, and a timestamp are stored. When a sending time, a first input time, a first output time, a second input time, a second output time, and a receiving time corresponding to a different packet ID are all obtained, an end-to-end delay, a delay on a network sleaf side, and a delay on a network aleaf side are calculated and displayed, as shown in a delay statistics summary table in Table 6. The end-to-end delay corresponds to a third round-trip delay between the terminal and the BNG, the delay on the network sleaf side corresponds to a fourth round-trip delay between the aggregation network sleaf side and the BNG, and the delay on the network aleaf side corresponds to a first round-trip delay between the terminal and the aggregation network aleaf side.

**Table 6**

| Packet ID | End-to-end delay | Delay on the network sleaf side | Delay on the network aleaf side |
|---|---|---|---|
| 1 | 200 ms | 200 ms | 200 ms |
| 2 | 200 ms | 200 ms | 200 ms |
| 3 | 200 ms | 200 ms | 200 ms |
| ... | | | |
| N (a positive integer greater than 3) | 300 ms | 300 ms | 290 ms |

In this embodiment of this application, for implementations of step 1 to step 10, refer to the implementation of the method shown in FIG. 2 or FIG. 10. Details are not described herein again. Therefore, through the foregoing step 1 to step 10, the BNG can detect the hop-by-hop network transmission quality between the BNG and the terminal. In this way, when PING is disabled on a user terminal, end-to-end connectivity of the terminal can be demarcated by using the method provided in this embodiment of this application, and the transmission quality such as the packet loss rate and the delay of the hop-by-hop network can be detected, so that it can be quickly demarcated whether a problem occurs in the access network, the aggregation network, or the BNG gateway. This method does not require cooperation of a terminal user, so that operation and maintenance efficiency is high, and it is easy to use, improving an end-to-end fault demarcation and recovery speed.

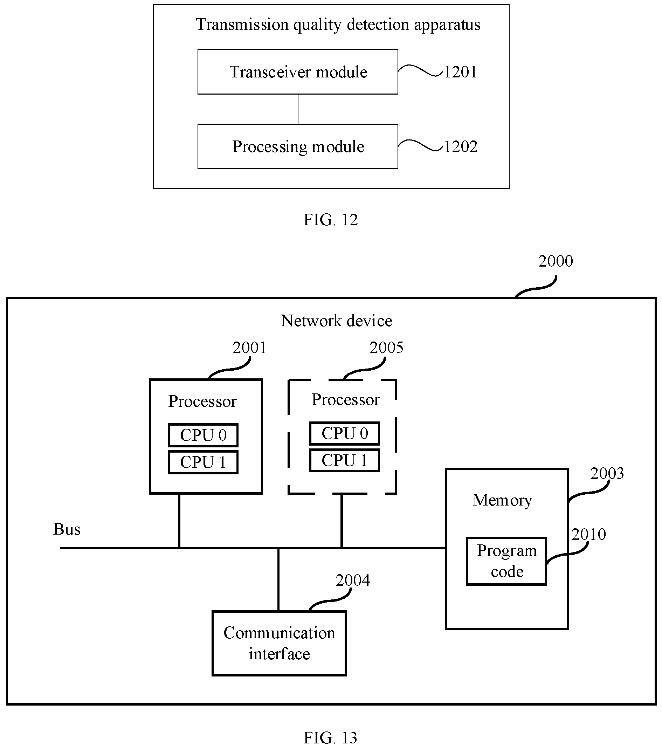

The foregoing describes the transmission quality detection method in embodiments of this application. Corresponding to the foregoing method, embodiments of this application further provide a transmission quality detection apparatus. FIG. 12 is a diagram of a structure of a transmission quality detection apparatus according to an embodiment of this application. Based on the following plurality of modules shown in FIG. 12, the transmission quality detection apparatus shown in FIG. 12 can perform all or a part of operations of the method shown in FIG. 2 or FIG. 10. It should be understood that the apparatus may include more additional modules than the shown modules or a part of the shown modules may be omitted. This is not limited in embodiments of this application. As shown in FIG. 12, the apparatus includes:
a transceiver module 1201, configured to perform a receiving related operation and/or a sending related operation performed by a BNG in the method shown in FIG. 2, or configured to perform another operation that is not a receiving related operation and/or a sending related operation performed by a network edge node in the method shown in FIG. 10; and
a processing module 1202, configured to perform another operation that is not the receiving related operation and/or the sending related operation performed by the BNG in the method shown in FIG. 2, or configured to perform an operation other than the another operation that is not the receiving related operation and/or the sending related operation performed by the network edge node in the method shown in FIG. 10.

In a possible implementation, the transceiver module includes a receiving module and/or a sending module. The receiving module is configured to perform the receiving related operation, and the sending module is configured to perform the sending related operation.

When the transmission quality detection apparatus shown in FIG. 12 is used for the BNG in the method shown in FIG. 2, the transceiver module 1201 is configured to obtain first transmission information and/or second transmission information, where the first transmission information includes information about transmission from the BNG to an aggregation network and information about transmission from the aggregation network to a terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, the second transmission information includes information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network; and the processing module 1202 is configured to detect hop-by-hop network transmission quality between the BNG and the terminal based on the first transmission information and/or the second transmission information.

In a possible implementation, the transceiver module 1201 is configured to: send a detection request packet to the terminal, where the detection request packet triggers the first network edge node to record the information about transmission from the BNG to the aggregation network, and triggers the second network edge node to record the information about transmission from the aggregation network to the terminal; and send a first collection request packet to the aggregation network, receive the information about transmission from the BNG to the aggregation network that is returned by the first network edge node based on the first collection request packet, and receive the information about transmission from the aggregation network to the terminal that is returned by the second network edge node based on the first collection request packet.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network.

In a possible implementation, the transceiver module 1201 is configured to: receive a detection reply packet returned by the terminal based on the detection request packet, where the detection reply packet triggers the third network edge node to record the information about transmission from the terminal to the aggregation network, and triggers the fourth network edge node to record the information about transmission from the aggregation network to the BNG; and send a second collection request packet to the aggregation network, receive the information about transmission from the terminal to the aggregation network that is returned by the third network edge node based on the second collection request packet, and receive the information about transmission from the aggregation network to the BNG that is returned by the fourth network edge node based on the second collection request packet.

In a possible implementation, the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network.

In a possible implementation, the processing module 1202 is further configured to: record sending information for sending the detection request packet and receiving information for receiving the detection reply packet, where the sending information includes at least one of a sending count and a sending time, and the receiving information includes at least one of a receiving count and a receiving time; and detect the hop-by-hop network transmission quality between the BNG and the terminal based on the sending information, the first transmission information, the second transmission information, and the receiving information.

In a possible implementation, the first collection request packet includes a first TLV field, and a type field in the first TLV field indicates that the first collection request packet is used to obtain the information about transmission from the BNG to the aggregation network or the information about transmission from the aggregation network to the terminal; and the second collection request packet includes a second TLV field, and a type field in the second TLV field indicates that the second collection request packet is used to obtain the information about transmission from the terminal to the aggregation network or the information about transmission from the aggregation network to the BNG.

In a possible implementation, if a protocol type of the terminal is PPPOE, both the detection request packet and the first collection request packet are echo request packets of an LCP; or if the protocol type of the terminal is IPOE V4, both the detection request packet and the first collection request packet are ARP request packets of an ARP; or if the protocol type of the terminal is IPOE V6, both the detection request packet and the first collection request packet are NS packets of an ND protocol.

In a possible implementation, the transceiver module 1201 is configured to send the detection request packet to the terminal based on a packet sending parameter, where the packet sending parameter includes at least one of a packet sending frequency, a packet sending quantity, a packet sending time interval, a packet length, and a packet priority, and the packet priority corresponds to a priority of the terminal.

In a possible implementation, the processing module 1202 is further configured to: disable a keepalive probe mechanism configured by the terminal, and stop sending, to the terminal, a keepalive probe packet corresponding to the keepalive probe mechanism.

In a possible implementation, the processing module 1202 is further configured to restart the keepalive probe mechanism configured by the terminal, and continue to send, to the terminal, a keepalive probe packet corresponding to the keepalive probe mechanism.

When the transmission quality detection apparatus shown in FIG. 12 is used for the network edge node in the method shown in FIG. 10, the processing module 1202 is configured to: when a received packet meets a detection request condition, determine that the received packet is a detection request packet sent by the BNG to a terminal; and if the network edge node is located near the BNG side in an aggregation network, record information about transmission from the BNG to the aggregation network in first transmission information; or if the network edge node is located near the terminal side in the aggregation network, record information about transmission from the aggregation network to the terminal in the first transmission information; and when the received packet meets a detection reply condition, determine that the received packet is a detection reply packet sent by the terminal to the BNG; and if the network edge node is located near the terminal side in the aggregation network, record information about transmission from the terminal to the aggregation network in second transmission information; or if the network edge node is located near the BNG side in the aggregation network, record information about transmission from the aggregation network to the BNG in the second transmission information; and the transceiver module 1201 is configured to: when the received packet meets a collection request condition, determine that the received packet is a collection request packet sent by the BNG, and send, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

In a possible implementation, the detection request condition includes that a destination address is an address of the terminal, and a packet type is a request packet; the detection reply condition includes that a source address is an address of the terminal, and a packet type is a reply packet; and the collection request condition includes that a destination address is a reference multicast address, a packet type is a request packet, and the reference multicast address includes an address of a network node in a BD corresponding to the terminal.

In a possible implementation, the information about transmission from the BNG to the aggregation network includes at least one of a first input count and a first input time of the detection request packet ingress to the aggregation network, and the information about transmission from the aggregation network to the terminal includes at least one of a first output count and a first output time of the detection request packet egress from the aggregation network; and the information about transmission from the terminal to the aggregation network includes at least one of a second input count and a second input time of the detection reply packet ingress to the aggregation network, and the information about transmission from the aggregation network to the BNG includes at least one of a second output count and a second output time of the detection reply packet egress from the aggregation network.

In a possible implementation, if a protocol type of the terminal is PPPOE, both the detection request packet and the collection request packet are backhaul request packets of an LCP; or if the protocol type of the terminal is IPOE V4, both the detection request packet and the collection request packet are ARP request packets of an ARP; or if the protocol type of the terminal is IPOE V6, both the detection request packet and the collection request packet are NS packets of an ND protocol.

In a possible implementation, the collection request packet includes a TLV field, and a type field in the TLV field indicates that the collection request packet is used to obtain the information about transmission from the BNG to the aggregation network, the information about transmission from the aggregation network to the terminal, the information about transmission from the terminal to the aggregation network, or the information about transmission from the aggregation network to the BNG. The processing module 1202 is configured to: change a destination address of the collection reply packet to a source address of the collection request packet, change the source address of the collection request packet to an address of the network edge node, change a packet type of the collection request packet to a reply packet, add the information about transmission from the BNG to the aggregation network, the information about transmission from the aggregation network to the terminal, the information about transmission from the terminal to the aggregation network, or the information about transmission from the aggregation network to the BNG to a value field in the TLV field, and obtain the collection reply packet corresponding to the collection request packet; and the transceiver module 1201 is configured to send the collection reply packet to the BNG.

It should be understood that, when the apparatus provided in FIG. 12 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments pertain to a same concept. For specific implementation processes of the apparatuses, refer to the method embodiments. Details are not described herein again. For beneficial effect of the apparatus provided in FIG. 12, refer to the beneficial effect in the method shown in FIG. 2 or FIG. 10. Details are not described herein again.

FIG. 13 is a diagram of a structure of a network device 2000 according to an example embodiment of this application. The network device 2000 shown in FIG. 13 is configured to perform operations related to the transmission quality detection method shown in FIG. 2 or FIG. 10. The network device 2000 is, for example, a switch or a router, and the network device 2000 may be implemented by using a general bus architecture.

As shown in FIG. 13, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to content disclosed in embodiments of the present invention. Alternatively, the processor may be a combination implementing a computing function, for example, a combination including one or more microprocessors, or a combination of the DSP and the microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, the bus is represented by using only one line in FIG. 13. However, it does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store desired program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an ethernet (Ethernet) interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 13. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 shown in FIG. 13. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, a sensor device, or the like.

In some embodiments, the memory 2003 is configured to store program code 2010 for executing the solutions of this application, and the processor 2001 may execute the program code 2010 stored in the memory 2003. In other words, the network device 2000 may implement the transmission quality detection method in the method embodiments through the processor 2001 and the program code 2010 in the memory 2003. The program code 2010 may include one or more software modules. Optionally, the processor 2001 may also store program code or instructions for executing the solutions of this application.

In a specific embodiment, the network device 2000 in this embodiment of this application may correspond to the BNG in the foregoing method embodiments, and the processor 2001 in the network device 2000 reads instructions in the memory 2003, so that the network device 2000 shown in FIG. 13 can perform all or a part of operations performed by the BNG.

Specifically, the processor 2001 is configured to: obtain first transmission information and/or second transmission information, where the first transmission information includes information about transmission from the BNG to an aggregation network and information about transmission from the aggregation network to a terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, the second transmission information includes information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network; and detect hop-by-hop network transmission quality between the BNG and the terminal based on the first transmission information and/or the second transmission information.

For brevity, another optional implementation is not described herein again.

For another example, the network device 2000 in this embodiment of this application may correspond to the network edge node in the foregoing method embodiments, and the processor 2001 in the network device 2000 reads instructions in the memory 2003, so that the network device 2000 shown in FIG. 13 can perform all or a part of operations performed by the network edge node.

Specifically, the processor 2001 is configured to: when a received packet meets a detection request condition, determine that the received packet is a detection request packet sent by a BNG to a terminal; and if the network edge node is located near the BNG side in an aggregation network, record information about transmission from the BNG to the aggregation network in first transmission information; or if the network edge node is located near the terminal side in the aggregation network, record information about transmission from the aggregation network to the terminal in the first transmission information; when the received packet meets a detection reply condition, determine that the received packet is a detection reply packet sent by the terminal to the BNG; and if the network edge node is located near the terminal side in the aggregation network, record information about transmission from the terminal to the aggregation network in second transmission information; or if the network edge node is located near the BNG side in the aggregation network, record information about transmission from the aggregation network to the BNG in the second transmission information; and when the received packet meets a collection request condition, determine that the received packet is a collection request packet sent by the BNG, and send, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

For brevity, another optional implementation is not described herein again.

The network device 2000 may further correspond to the transmission quality detection apparatus shown in FIG. 12, and functional modules in the transmission quality detection apparatus are implemented by using software of the network device 2000. In other words, the functional modules included in the transmission quality detection apparatus are generated after the processor 2001 of the network device 2000 reads the program code 2010 stored in the memory 2003.

Steps of the transmission quality detection method shown in FIG. 2 or FIG. 10 are completed through an integrated logic circuit of hardware in the processor of the network device 2000 or by using instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein again.

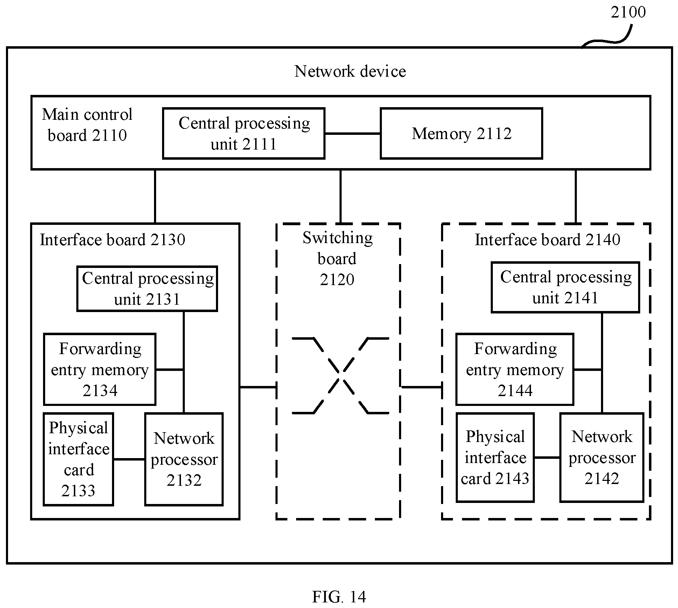

FIG. 14 is a diagram of a structure of a network device 2100 according to another example embodiment of this application. The network device 2100 shown in FIG. 14 is configured to perform all or a part of operations in the transmission quality detection method shown in FIG. 2 or FIG. 10. The network device 2100 is, for example, a switch or a router, and the network device 2100 may be implemented by using a general bus architecture.

As shown in FIG. 14, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route computing, device management, device maintenance, and protocol processing functions. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an ethernet interface, a POS (Packet over SONET/SDH) interface, and the like. The ethernet interface is, for example, a flexible ethernet client (Flexible Ethernet Client, FlexE Client) interface. The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented through an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing of an uplink packet may include: processing of an ingress interface of the packet and forwarding table lookup; and processing of a downlink packet may include: forwarding table lookup and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic ingresses the interface board 2130 from the physical interface card, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to perform data exchange between the interface boards. For example, the interface board 2130 and the interface board 2140 may communicate with each other through the switching board 2120.

The main control board 2110 is coupled to the interface board. For example, the main control board 2110, the interface board 2130, the interface board 2140, and the switching board 2120 are connected to a system backboard through a system bus for interworking. In a possible implementation, an inter-process communication (inter-process communication, IPC) channel is established between the main control board 2110 and the interface board 2130 and between the main control board 2110 and the interface board 2140, and communication between the main control board 2110 and the interface board 2130 and between the main control board 2110 and the interface board 2140 is performed through the IPC channel.

Logically, the network device 2100 includes a control plane and a forwarding plane. The control plane includes the main control board 2110 and the central processing unit 2111. The forwarding plane includes components, for example, the forwarding entry memory 2134, the physical interface card 2133, and the network processor 2132, that perform forwarding. The control plane performs functions: a router, generating a forwarding table, processing signaling and a protocol packet, configuring and maintaining a state of the network device, and the like. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards; and when there are a plurality of main control boards, a primary main control board and a secondary main control board may be included. There may be one or more interface boards. A network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented through the switching board, to provide a large-capacity data exchange and processing capability. Therefore, a data access and processing capability of the network device in the distributed architecture is greater than that of the network device in the centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board, to perform functions obtained by combining the two central processing units. The network device in this form has a weak data exchange and processing capability (for example, a network device such as a low-end switch or router). A specific architecture that is to be used depends on a specific networking deployment scenario. This is not limited herein.

In a specific embodiment, the network device 2100 corresponds to the transmission quality detection apparatus shown in FIG. 12. In some embodiments, the transceiver module 1201 in the transmission quality detection apparatus shown in FIG. 12 is equivalent to the physical interface card 2133 in the network device 2100, and the processing module 1202 is equivalent to the central processing unit 2111 or the network processor 2132 in the network device 2100.

An embodiment of this application further provides a transmission quality detection system. The transmission quality detection system includes a BNG, at least one network edge node in an aggregation network, and a terminal, and the BNG is connected to the terminal through at least one network including the aggregation network. For example, the BNG is the network device 2000 shown in FIG. 13 or the network device 2100 shown in FIG. 14, and the at least one network edge node in the aggregation network is the network device 2000 shown in FIG. 13 or the network device 2100 shown in FIG. 14. For the transmission quality detection method performed by the BNG, the at least one network edge node in the aggregation network, and the terminal, refer to related descriptions in the embodiment shown in FIG. 2 or FIG. 10. Details are not described herein again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the method shown in FIG. 2 or FIG. 10.

It should be understood that the processor may be a CPU, or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to cause a computer to implement any transmission quality detection method above.

An embodiment of this application further provides a computer program (product). When the computer program is executed by a computer, a processor or the computer may be caused to perform corresponding steps and/or procedures in the foregoing method embodiments.

An embodiment of this application further provides a chip. The chip includes a processor, configured to invoke instructions from a memory and run the instructions stored in the memory, so that a communication device on which the chip is installed to perform any transmission quality detection method above.

An embodiment of this application further provides another chip. The chip includes an input interface, an output interface, a processor, and a memory. The input interface, the output interface, the processor, and the memory are connected through an internal connection path. The processor is configured to execute code in the memory. When the code is executed, the processor is configured to perform any transmission quality detection method above.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may be aware that, method steps and modules described with reference to embodiments disclosed in this specification can be implemented by using software, hardware, firmware, or any combination thereof. To clearly describe interchangeability between the hardware and the software, steps and compositions of embodiments have been usually described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or a part of the steps of embodiments may be implemented by hardware or a program instructing related hardware. The program may be stored in a computer-readable storage medium. The storage medium may be a read-only memory, a magnetic disk, an optical disc, or the like.

When the software is used to implement embodiments, all or a part of embodiments may be implemented in a form of a computer program product. The computer program product includes one or more computer program instructions. In an example, the method according to embodiments of this application may be described in a context of machine-executable instructions. For example, the machine-executable instructions are included in a program module that is in a component for execution in a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and there may be other division manners during actual application. For example, a plurality of modules or components may be combined or may be integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, to be specific, may be located at one place, or may be distributed on a plurality of network modules. A part or all of the modules may be selected based on actual requirements to implement the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in a form of a software functional module and sold or used as an independent product, the integrated module may be stored in a computer-readable storage medium. Based on this understanding, the technical solutions of this application essentially, or the part contributing to the prior art, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", or "a possible implementation" mentioned throughout this specification means that particular features, structures, or characteristics related to embodiments or implementations are included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A transmission quality detection method, applied to a broadband network gateway BNG, wherein the BNG is connected to a terminal through at least one network comprising an aggregation network, and the method comprises:
obtaining first transmission information and/or second transmission information, wherein the first transmission information comprises information about transmission from the BNG to the aggregation network and information about transmission from the aggregation network to the terminal, the information about transmission from the BNG to the aggregation network is recorded by a first network edge node near the BNG side in the aggregation network, the information about transmission from the aggregation network to the terminal is recorded by a second network edge node near the terminal side in the aggregation network, to obtain the second transmission information, the second transmission information comprises information about transmission from the terminal to the aggregation network and information about transmission from the aggregation network to the BNG, the information about transmission from the terminal to the aggregation network is recorded by a third network edge node near the terminal side in the aggregation network, and the information about transmission from the aggregation network to the BNG is recorded by a fourth network edge node near the BNG side in the aggregation network; and
detecting hop-by-hop network transmission quality between the BNG and the terminal based on the first transmission information and/or the second transmission information.

2. The method according to claim 1, wherein the obtaining the first transmission information comprises:
sending a detection request packet to the terminal, wherein the detection request packet triggers the first network edge node to record the information about transmission from the BNG to the aggregation network, and triggers the second network edge node to record the information about transmission from the aggregation network to the terminal; and
sending a first collection request packet to the aggregation network, receiving the information about transmission from the BNG to the aggregation network that is returned by the first network edge node based on the first collection request packet, and receiving the information about transmission from the aggregation network to the terminal that is returned by the second network edge node based on the first collection request packet.

3. The method according to claim 2, wherein the information about transmission from the BNG to the aggregation network comprises at least one of a first input count and a first input time of the detection request packet ingress to the aggregation network, and the information about transmission from the aggregation network to the terminal comprises at least one of a first output count and a first output time of the detection request packet egress from the aggregation network.

4. The method according to claim 2 or 3, wherein the obtaining the second transmission information comprises:
receiving a detection reply packet returned by the terminal based on the detection request packet, wherein the detection reply packet triggers the third network edge node to record the information about transmission from the terminal to the aggregation network, and triggers the fourth network edge node to record the information about transmission from the aggregation network to the BNG; and
sending a second collection request packet to the aggregation network, receiving the information about transmission from the terminal to the aggregation network that is returned by the third network edge node based on the second collection request packet, and receiving the information about transmission from the aggregation network to the BNG that is returned by the fourth network edge node based on the second collection request packet.

5. The method according to claim 4, wherein the information about transmission from the terminal to the aggregation network comprises at least one of a second input count and a second input time of the detection reply packet ingress to the aggregation network, and the information about transmission from the aggregation network to the BNG comprises at least one of a second output count and a second output time of the detection reply packet egress from the aggregation network.

6. The method according to claim 4 or 5, wherein the method further comprises:
recording sending information for sending the detection request packet and receiving information for receiving the detection reply packet, wherein the sending information comprises at least one of a sending count and a sending time, and the receiving information comprises at least one of a receiving count and a receiving time; and
the detecting the hop-by-hop network transmission quality between the BNG and the terminal based on the first transmission information and the second transmission information comprises:
detecting the hop-by-hop network transmission quality between the BNG and the terminal based on the sending information, the first transmission information, the second transmission information, and the receiving information.

7. The method according to claim 5, wherein the first collection request packet comprises a first type, length, and value TLV field, and a type field in the first TLV field indicates that the first collection request packet is used to obtain the information about transmission from the BNG to the aggregation network or the information about transmission from the aggregation network to the terminal; and
the second collection request packet comprises a second TLV field, and a type field in the second TLV field indicates that the second collection request packet is used to obtain the information about transmission from the terminal to the aggregation network or the information about transmission from the aggregation network to the BNG.

8. The method according to any one of claims 2 to 7, wherein a protocol type of the terminal is point-to-point protocol over ethernet PPPOE, and both the detection request packet and the first collection request packet are echo request packets of a link control protocol LCP; or
the protocol type of the terminal is internet protocol over ethernet version 4 IPOE V4, and both the detection request packet and the first collection request packet are ARP request packets of an address resolution protocol ARP; or
the protocol type of the terminal is internet protocol over ethernet version 6 IPOE V6, and the detection request packet and the first collection request packet are neighbor solicitation NS packets of a neighbor discovery ND protocol.

9. The method according to any one of claims 2 to 8, wherein the sending the detection request packet to the terminal comprises:
sending the detection request packet to the terminal based on a packet sending parameter, wherein the packet sending parameter comprises at least one of a packet sending frequency, a packet sending quantity, a packet sending time interval, a packet length, and a packet priority, and the packet priority corresponds to a priority of the terminal.

10. The method according to any one of claims 2 to 9, wherein before the sending the detection request packet to the terminal, the method further comprises:
disabling a keepalive probe mechanism configured by the terminal, and stopping sending, to the terminal, a keepalive probe packet corresponding to the keepalive probe mechanism.

11. The method according to claim 10, wherein after the detecting the hop-by-hop network transmission quality between the BNG and the terminal based on the first transmission information and/or the second transmission information, the method further comprises:
restarting the keepalive probe mechanism configured by the terminal, and continuing to send, to the terminal, a keepalive probe packet corresponding to the keepalive probe mechanism.

12. A transmission quality detection method, applied to a network edge node in an aggregation network, wherein at least one network comprising the aggregation network is configured to connect a terminal and a broadband network gateway BNG, and the method comprises:
when a received packet meets a detection request condition, determining that the received packet is a detection request packet sent by the BNG to the terminal; and if the network edge node is located near the BNG side in the aggregation network, recording information about transmission from the BNG to the aggregation network in first transmission information; or if the network edge node is located near the terminal side in the aggregation network, recording information about transmission from the aggregation network to the terminal in the first transmission information;
when the received packet meets a detection reply condition, determining that the received packet is a detection reply packet sent by the terminal to the BNG; and if the network edge node is located near the terminal side in the aggregation network, recording information about transmission from the terminal to the aggregation network in second transmission information; or if the network edge node is located near the BNG side in the aggregation network, recording information about transmission from the aggregation network to the BNG in the second transmission information; and
when the received packet meets a collection request condition, determining that the received packet is a collection request packet sent by the BNG, and sending, to the BNG based on the collection request packet, the recorded information about transmission from the BNG to the aggregation network, the recorded information about transmission from the aggregation network to the terminal, the recorded information about transmission from the terminal to the aggregation network, or the recorded information about transmission from the aggregation network to the BNG.

13. The method according to claim 12, wherein the detection request condition comprises that a destination address is an address of the terminal, and a packet type is a request packet; the detection reply condition comprises that a source address is an address of the terminal, and a packet type is a reply packet; and the collection request condition comprises that a destination address is a reference multicast address, a packet type is a request packet, and the reference multicast address comprises an address of a network node in a bridge domain BD corresponding to the terminal.

14. The method according to claim 12 or 13, wherein the information about transmission from the BNG to the aggregation network comprises at least one of a first input count and a first input time of the detection request packet ingress to the aggregation network, and the information about transmission from the aggregation network to the terminal comprises at least one of a first output count and a first output time of the detection request packet egress from the aggregation network; and
the information about transmission from the terminal to the aggregation network comprises at least one of a second input count and a second input time of the detection reply packet ingress to the aggregation network, and the information about transmission from the aggregation network to the BNG comprises at least one of a second output count and a second output time of the detection reply packet egress from the aggregation network.

15. The method according to any one of claims 12 to 14, wherein a protocol type of the terminal is point-to-point protocol over ethernet PPPOE, and both the detection request packet and the collection request packet are backhaul request packets of a link control protocol LCP; or
the protocol type of the terminal is internet protocol over ethernet version 4 IPOE V4, and both the detection request packet and the collection request packet are ARP request packets of an address resolution protocol ARP; or
the protocol type of the terminal is internet protocol over ethernet version 6 IPOE V6, and both the detection request packet and the collection request packet are neighbor solicitation NS packets of a neighbor discovery ND protocol.

16. The method according to any one of claims 12 to 15, wherein the collection request packet comprises a type, length, and value TLV field, and a type field in the TLV field indicates that the collection request packet is used to obtain the information about transmission from the BNG to the aggregation network, the information about transmission from the aggregation network to the terminal, the information about transmission from the terminal to the aggregation network, or the information about transmission from the aggregation network to the BNG; and
sending, to the BNG based on the collection request packet, the information about transmission from the BNG to the aggregation network, the information about transmission from the aggregation network to the terminal, the information about transmission from the terminal to the aggregation network, or the information about transmission from the aggregation network to the BNG comprises:
changing a destination address of the collection reply packet to a source address of the collection request packet, changing the source address of the collection request packet to an address of the network edge node, changing a packet type of the collection request packet to a reply packet, adding the information about transmission from the BNG to the aggregation network, the information about transmission from the aggregation network to the terminal, the information about transmission from the terminal to the aggregation network, or the information about transmission from the aggregation network to the BNG to a value field in the TLV field, and obtaining the collection reply packet corresponding to the collection request packet; and
sending the collection reply packet to the BNG.

17. A transmission quality detection apparatus, wherein the apparatus comprises:
a transceiver module, configured to perform a receiving related operation and/or a sending related operation performed in the method according to any one of claims 1 to 11, or configured to perform a receiving related operation and/or a sending related operation performed in the method according to any one of claims 12 to 16; and
a processing module, configured to perform an operation other than the receiving related operation and/or the sending related operation performed in the method according to any one of claims 1 to 11, or configured to perform an operation other than the receiving related operation and/or the sending related operation performed in the method according to any one of claims 12 to 16.

18. A network device, wherein the network device comprises a processor, the processor is coupled to a memory, the memory stores at least one program instruction or code, and the at least one program instruction or the code is loaded and executed by the processor, so that the network device implements the transmission quality detection method according to any one of claims 1 to 11, or the network device implements the transmission quality detection method according to any one of claims 12 to 16.

19. A transmission quality detection system, wherein the transmission quality detection system comprises a broadband network gateway BNG, at least one network edge node in an aggregation network, and a terminal, and the BNG is connected to the terminal through at least one network comprising the aggregation network; and
the BNG is configured to perform the transmission quality detection method according to any one of claims 1 to 11, any one of the at least one network edge node is configured to perform the transmission quality detection method according to any one of claims 12 to 16, and the terminal is configured to: receive a detection request packet sent by the BNG, and return a detection reply packet to the BNG based on the detection request packet.

20. A computer-readable storage medium, wherein the computer storage medium stores at least one instruction, and the at least one instruction is loaded and executed by a processor, to cause a computer to implement the transmission quality detection method according to any one of claims 1 to 16.

21. A computer program product, wherein the computer program product comprises computer program code, and the computer program code is loaded and executed by a computer, to cause the computer to implement the transmission quality detection method according to any one of claims 1 to 16.
